# EUROPEAN PATENT SPECIFICATION

(11) **EP 4 520 194 B1**
(45) Date of publication and mention of the grant of the patent: **18.02.2026**
(21) Application number: 24198387.3
(22) Date of filing: 04.09.2024
(51) Int. Cl.: A24C 5/35, B65B 19/04, B65G 47/51

(54) **VARIABLE-CAPACITY STORE**
SPEICHER MIT VARIABLER KAPAZITÄT
MAGASIN À CAPACITÉ VARIABLE

(30) Priority: 06.09.2023 IT 202300018318
(43) Date of publication of application: 12.03.2025
(73) Proprietor: G.D S.p.A., 40133 Bologna (IT)
(72) Inventor: FERRARI, Michele, 40133 BOLOGNA (IT); CALZOLARI, Luca, 40133 BOLOGNA (IT)
(74) Representative: Studio Torta S.p.A.

(56) References cited:
- EP-A2- 1 344 463
- WO-A1-2019/073447
- US-A- 4 717 009

## Description

### TECHNICAL FIELD

The invention relates to a variable-capacity store, to a method of conveying articles, in particular cylindrical articles of the tobacco processing industry, and to a plant.

### BACKGROUND OF THE INVENTION

Variable-capacity stores for cigarettes of the type described in patent EP581143 are known in the tobacco processing industry. These stores comprise a variable-length storage path having two conveying portions wound around one another on a common axis with turns having the same inclination; and a deflection device, which is configured to move the cigarettes from one portion to the other and is movable along both portions so as to change the overall length of the storage path.

EP838165 discloses a variable-capacity store comprising two helical conveyors arranged one above the other and connected by an intermediate element configured to transfer the products from the upper conveyor to the lower conveyor only by force of gravity. The two conveyors operate pneumatically.

This type of stores is affected by several drawbacks, among which the following ones are worth being mentioned.

The particular arrangement of the two conveying portions arranged one within the other not only makes the structure and construction of the stores particularly complex and expensive, but also significantly complicates maintenance operations.

In addition, the stores are not very ductile as it is not possible to provide input and output stations for the cylindrical articles arranged in desired positions (for example, one at the bottom and one at the top). More in particular, according to EP581143 and EP838165, the output of the articles is located at the bottom, a position that is not particularly convenient for the layouts of current machines (such as, for example, cigarette packer machines or combiners for combining filters and tobacco rods together) that can be found downstream of the stores.

Furthermore, please note that pneumatic conveyors (like, for example, the ones disclosed in EP838165) are not very delicate with articles (in particular, cigarettes). As a matter of fact, this type of conveyors can not only damage the articles with relative ease, but can also lead to the detachment and dispersion of particles (for example, tobacco) from the articles themselves.

In addition, conveying relatively delicate items (such as cigarettes) exclusively by gravity can lead to damage to the articles and/or to the creation of clogs.

WO2019073447A1 discloses a variable-capacity store for articles of the tobacco processing industry, comprising a conveyor assembly comprising a first conveyor having a substantially helical shape; a second conveyor with a substantially helical shape and arranged above the first conveyor; a linear transfer conveyor, designed to convey the articles from the first conveyor to the second conveyor, having a variable length. This type of stores suffers from some defects, among which the following ones are worth being mentioned: the fact that it is difficult to be able to precisely adjust the flow of articles leaving the store (and, hence, supplied to following machines); the system is rather rigid with regard to the direction of the articles leaving the store (and, therefore, does not give the possibility of correctly exploiting the spaces available for the positioning of following machines).

The object of the invention is to provide a variable-capacity store, a method of conveying articles, in particular cylindrical articles of the tobacco processing industry, and a plant, which are designed to at least partially overcome the drawbacks of the prior art and, at the same time, are easy and economic to be manufactured and implemented.

### SUMMARY

In accordance with the invention, there are provided a variable-capacity store, a method of conveying articles (in particular, cylindrical articles of the tobacco processing industry) and a plant as claimed in the accompanying independent claims and, preferably, in any one of the claims that directly or indirectly depend on the aforesaid independent claims.

### BRIEF DESCRIPTION OF THE DRAWINGS

The invention will now be described with reference to the accompanying drawings showing a non-limiting embodiment thereof, wherein:
- figures 1 to 5 are perspective views, with parts removed for greater clarity, of successive operating configurations of a part of the store in accordance with the invention;
- figure 6 is a side view of a component of the store of figures 1-5;
- figure 7 is a cross section of a detail of the store of figures 1-5;
- figure 8 is a perspective view of the machine of figures 1-5 with some details left out for greater clarity;

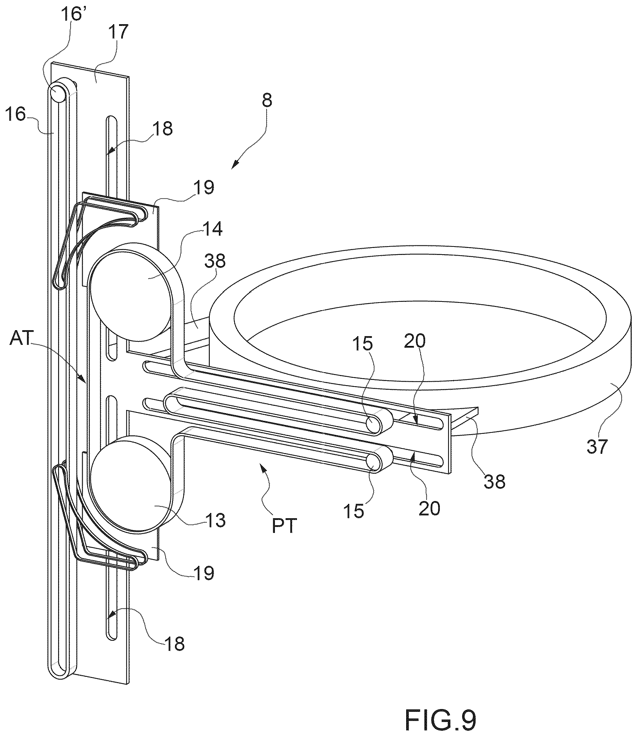

- figure 9 is a perspective view of the component of figure 6 connected to a further element;
- figure 10 is a perspective view of components of the store of figures 1-5;
- figure 11 is a perspective view of a detail of the store of figures 1-5;
- figure 12 is a perspective view from the bottom of a detail of figure 11;
- figure 13 is a perspective view of the store of figures 1-5; and
- figures 14 and 15 show a detail, on a larger scale, of the store of figure 13 in two different operating configurations.

### DETAILED DESCRIPTION

In the accompanying figures, number 1 indicates, as a whole, a variable-capacity store for articles 2. The store comprises a conveyor assembly 3 for conveying the articles 2 (in particular, in a mass) from an input station 4 to an output station 5 along a path P (in particular, with a variable length).

In particular, the articles 2 are substantially cylindrical articles, more in particular of the tobacco processing industry. For example, the articles 2 are cigarettes, cigarette filters, cigarette filter components (rods), tobacco rods, cartridges and/or components for electronic cigarettes. According to some specific and non-limiting embodiments, the articles 2 are cigarettes.

The conveyor assembly 3 comprises a conveyor 6 for conveying the articles 2 from the input station 4 along a segment S1 of the path P; and at least a transfer conveyor assembly 8, which is configured to convey the articles 2 from the conveyor 6 along a transfer segment IS (in particular, with substantially linear portions) of the path P and has an input 9, arranged in the area of the segment S1 to receive the articles 2 from the conveyor 6.

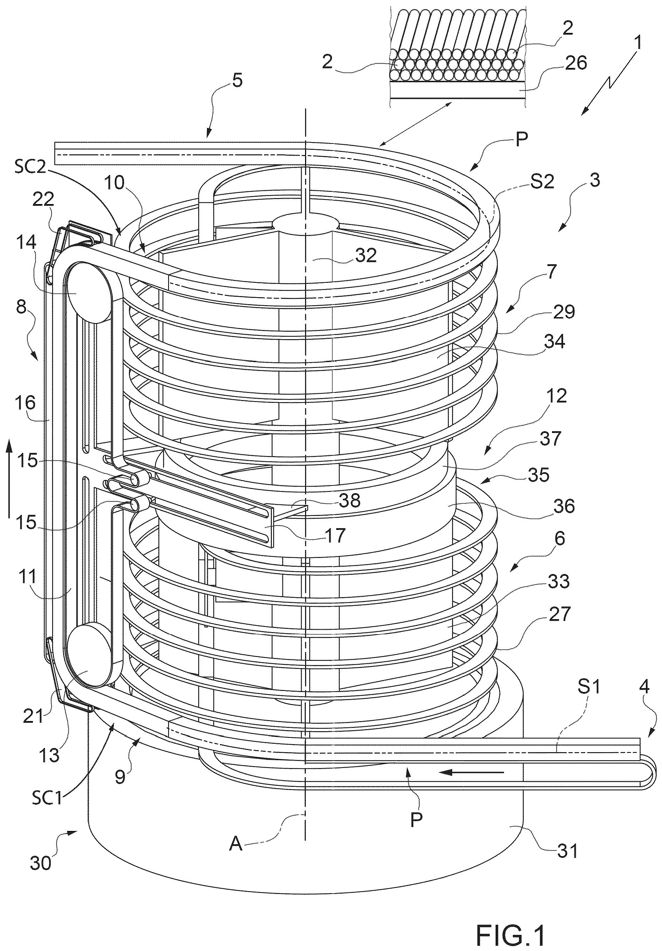

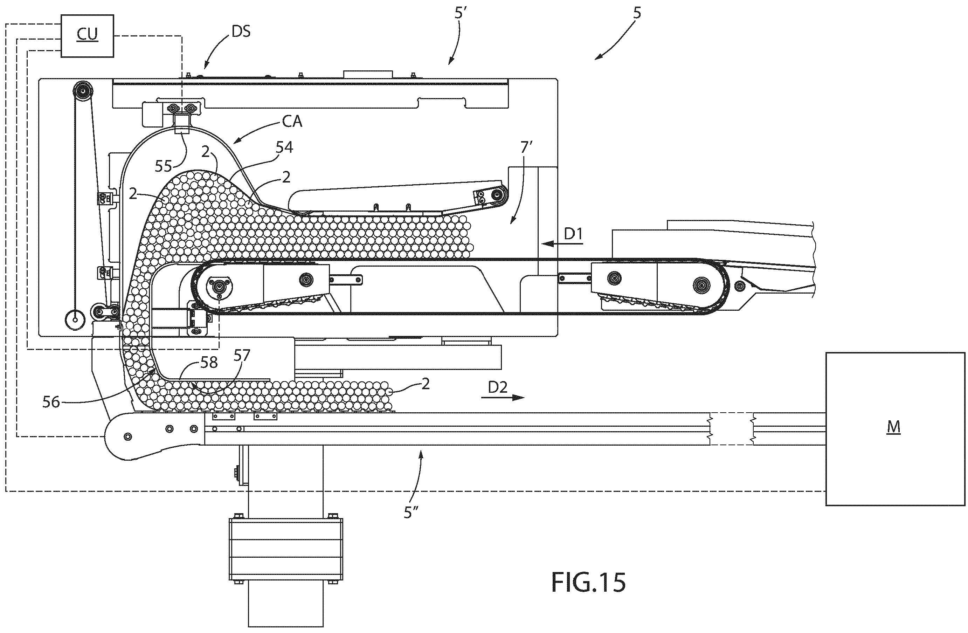

In particular, the articles 2 have an oblong shape. More in particular, the conveyor assembly 3 is designed to convey the articles 2 in a mass (namely, in contact with one another and in several layers - see for example the enlargement of the upper part of figure 1 and figure 15) and, more in particular, crosswise (namely, in a transverse direction, in particular perpendicular to their longitudinal extension).

Advantageously, though not necessarily, the conveyor assembly 3 also comprises a conveyor 7 for conveying the articles 2 to the output station 5 along a segment S2 of the path P. In these cases, the transfer conveyor assembly 8 is configured to convey the articles 2 from the conveyor 6 to the conveyor 7 along the transfer segment IS (in particular, the substantially linear transfer segment) of the path P and has an input 10, arranged in the area of the segment S2 to feed the articles to the conveyor 7.

In particular, the conveyors 6 and 7 (and, in some cases, also the transfer conveyor assembly 8) are endless conveyors.

According to some non-limiting embodiments, the transfer conveyor assembly 8 is arranged between the conveyors 6 and 7.

Advantageously, though not necessarily, the transfer conveyor assembly 8 is arranged on the side of the conveyors 6 and 7.

Advantageously, though not necessarily, the transfer conveyor assembly 8 is configured to convey the articles 2 upwards.

The segment S1 (which, in particular, has a substantially helical shape) extends from the input station 4 to the input 9. The segment S2 (which, in particular, has a substantially helical shape) extends from the output 10 to the output station 5.

According to some non-limiting embodiments, the store 1 further comprises a moving assembly 12 for moving the transfer conveyor assembly 8 so as to move said input 9 and said output 10 along the conveyor 6 and the conveyor 7, respectively. In particular, the moving assembly 12 also is (consequently) configured to change the length of the transfer segment IS and of the segments S1 and S2.

It should be noted that, by lengthening the segments S1 and S2, the length of the path P (and, hence, the capacity of the store 1) increases; by shortening the segments S1 and S2, the length of the path P (and, hence, the capacity of the store 1) decreases.

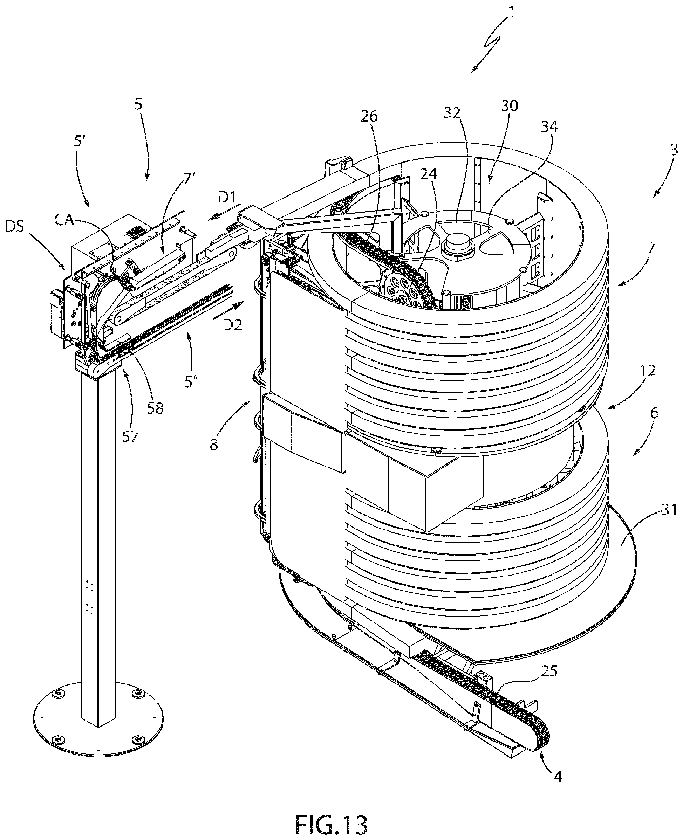

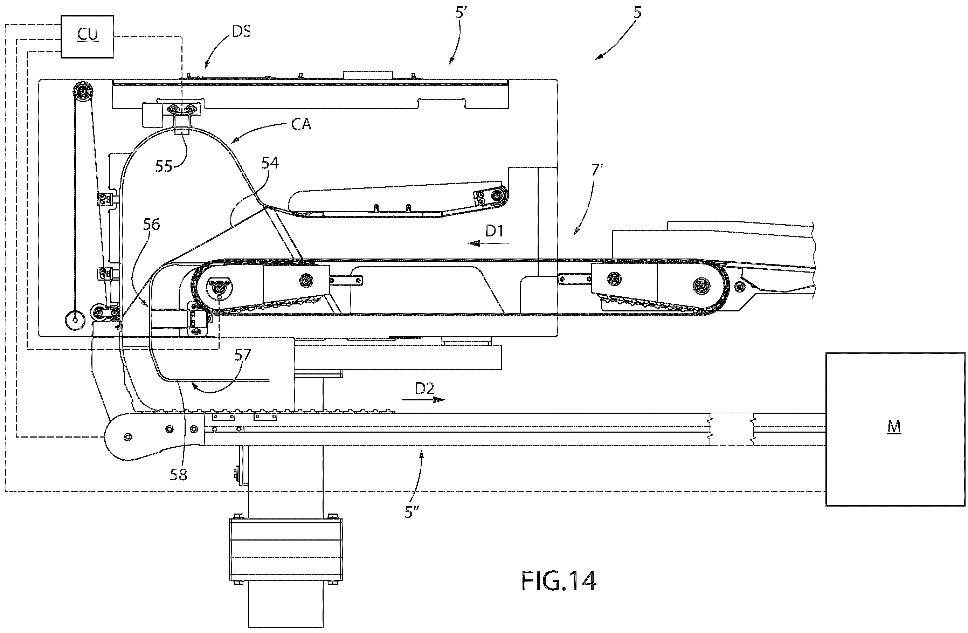

With particular reference to figures 13, 14 and 15, the store 1 also comprises an unloading device 5', which is arranged in the area of the output station 5 and comprises: at least a conveyor 5", which is configured to transfer the articles 2 to a machine M arranged downstream of the store 1; a compensation area CA, which is arranged downstream of the conveyor 7 and upstream of the conveyor 5" (in particular, between the conveyor 7 and the conveyor 5") and is configured to contain a variable quantity of articles 2 (so as to at least partially compensate for capacity differences between the conveyor 7 and the conveyor 5"); and a control unit CU, which is configured to adjust the operating speed of the conveyor 5" as a function of the requests of the machine M and, in particular, the operating speed of the conveyor 7 as a function of the degree of filling of the compensation area CA (namely, how filled it is, in particular relative to its total capacity).

Tests have shown that in this way it is possible to fine-tune the flow of articles 2 to the machine M by precisely supplying the quantity of articles it needs.

In this context, it should be pointed out that the conveyor assembly 3 itself can be used to compensate for the different operating speeds (and/or momentary standstills) of a machine (for example, a machine for the production of articles 2 - of a known type and not shown) designed to feed the articles 2 to the input station 4 and of the machine M (for example, configured to combine the articles 2 with other components to produce a final product or to pack the articles 2).

Therefore, it is surprising that tests have shown that the presence of the unloading device 5' significantly improves the supply to the machine M (and, hence, the operation of the machine M itself).

In particular, the compensation area CA comprises (more in particular, is) a variable-volume compensation chamber.

In particular, in use, the control unit CU decreases the quantity (per time unit) of articles 2 fed to the unloading device 5' (by decreasing the speed of the conveyor 7) when the compensation area CA fills (beyond a certain limit). In addition or alternatively, vice versa, the control unit CU increases the quantity (per time unit) of articles 2 fed to the unloading device 5' (by increasing the speed of the conveyor 7) when the compensation area CA empties (beyond a certain limit).

In particular, in use, the control unit CU decreases the speed of the conveyor 5" when the machine M needs fewer articles 2 and increases the speed of the conveyor 5" when the machine M needs more articles 2.

Advantageously, though not necessarily, the conveyor 7 is configured to convey the articles 2 towards the unloading device 5' (in particular, towards the compensation area CA; more in particular, to the compensation area CA) in a direction D1; the conveyor 5" is configured to convey the articles 2 coming from the compensation area CA in a second direction D2 different from the direction D1 (in particular, at least partially contrary to the first direction D1).

In this way, it is possible to place the machine M in a more suitable position and, therefore, reduce the overall dimensions.

The unloading device 5' comprises a feeding conveyor 7', which is configured to receive the articles 2 from the conveyor 7 and to feed the articles 2 to the compensation area CA (in particular, in the direction D1); the control unit CU is configured to adjust the operating speed of the feeding conveyor 7' (and, in particular, of the conveyor 7) as a function of the degree of filling of the compensation area CA.

In particular, in use, the control unit CU decreases the speed of the feeding conveyor 7' when the compensation area CA fills (beyond a certain limit). In addition or alternatively, vice versa, the control unit CU increases the speed of the feeding conveyor 7' when the compensation area CA empties (beyond a certain limit).

Advantageously, though not necessarily, the unloading device 5' is configured to feed the articles 2 to the machine M in a mass with a controlled height (in particular, ranging from a maximum height to a minimum height).

According to some non-limiting embodiments, the unloading device 5' comprises a detection system DS, which is configured to detect a level of the articles 2 within the compensation area CA and is connected to said control unit CU. The control unit CU is configured to adjust the operating speed of the feeding conveyor 7' (and, in particular, of the conveyor 7) as a function of the data detected by the detection system DS (in particular, as a function of the level of the articles within the compensation area CA). In particular, the detection system DS comprises at least a deformable element 54, which is configured to change its position within the compensation area CA as a consequence of the level of the articles within the compensation area CA, and a sensor 55 configured to detect the position of the deformable element 54 (e.g. the sensor 55 is a proximity sensor).

This structure is particularly simple and functional.

For example, the deformable element 54 is a deformable band or a deformable wall (comprising a plurality of panels hinged to one another).

Advantageously, though not necessarily, the unloading device 5' comprises a transfer channel 56 for taking the articles 2 from the compensation area CA to the conveyor 5", which is arranged under the compensation area CA.

In this way, the articles 2 are brought onto the conveyor 5" in a simple (inexpensive) and efficient manner.

In particular, the transfer channel 56 is substantially vertical.

Advantageously, though not necessarily, the unloading device 5' has a levelling wall 58, which is arranged above the conveyor 5" and is configured to limit a height of a mass of articles 2 arranged on the conveyor 5", and an output channel 57, which is connected to the transfer channel 56 and is delimited, at the bottom, by the conveyor 5" and, at the top, by the levelling wall 58.

Tests have shown that this structure makes it possible to obtain a particularly constant supply to the machine M in a simple and inexpensive manner.

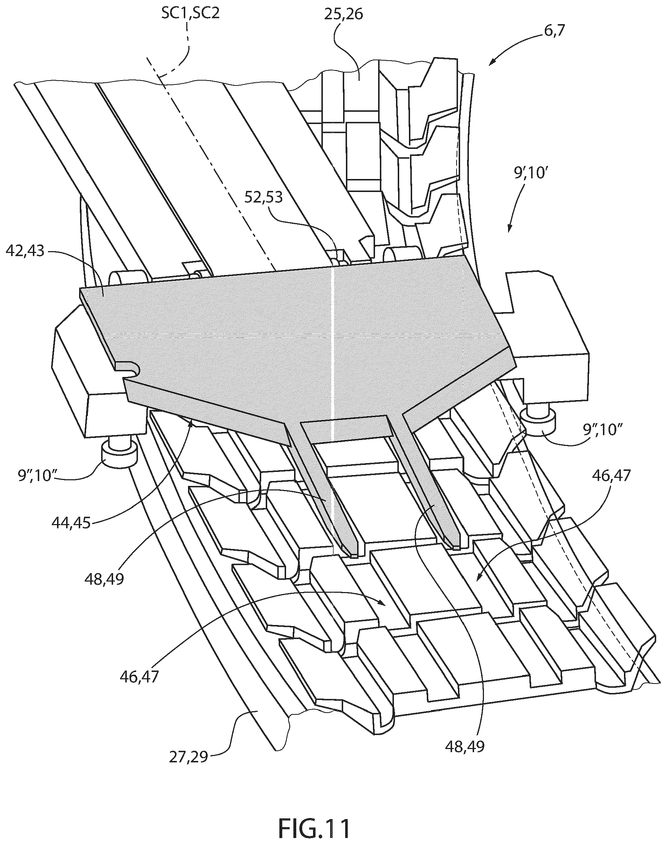

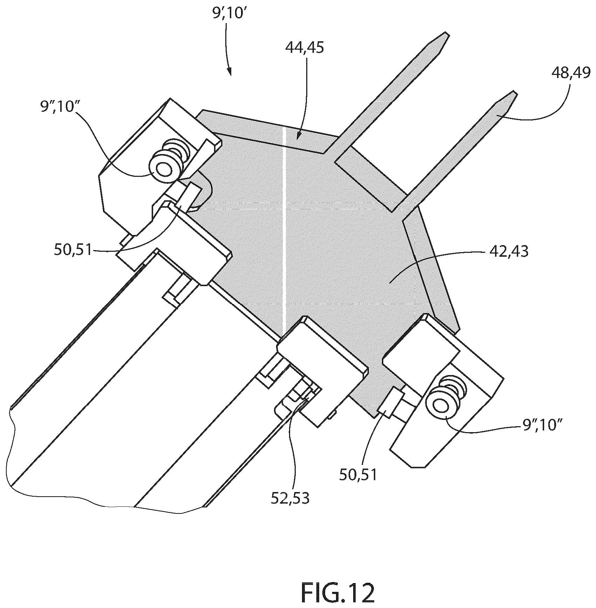

According to some non-limiting embodiments (e.g. as shown in figures 11 and 12), the conveyor assembly 3 comprises a joining device 9', which is configured to allow the articles 2 to shift from the conveyor 6 to the transfer conveyor assembly 8 and is movable on the conveyor 6. In some cases, the conveyor assembly 3 also comprises a joining device 10', which is configured to allow the articles 2 to shift from the transfer conveyor assembly 8 to the conveyor 7 and is movable on the conveyor 7.

In particular, the joining device 9' comprises at least two centring elements 9", which are arranged on opposite sides of the conveyor 6 to reduce the lateral movement of the joining device 9' relative to the conveyor 6.

In particular, the joining device 10' comprises at least two centring elements 10", which are arranged on opposite sides of the conveyor 7 to reduce the lateral movement of the joining device 10' relative to the conveyor 7.

Each centring element 9" comprises at least a first roller (in particular, at least a roller bearing) and/or each centring element 10" comprises at least a second roller (in particular, at least a roller bearing).

Tests have shown that, in this way, it is possible to obtain more stable and reliable connections of the transfer conveyor assembly 8 to the conveyors 6 and/or 7 (a more precise relative position) and a reduction in clogging events.

Advantageously, though not necessarily, the conveying assembly 3 comprises both the joining device 9' and the joining device 10'.

According to some preferred, though non-limiting embodiments, the joining devices 9' and 10' are substantially identical. To this regard, it should be pointed out that figures 11 and 12 show both the joining device 9' and the joining device 10'.

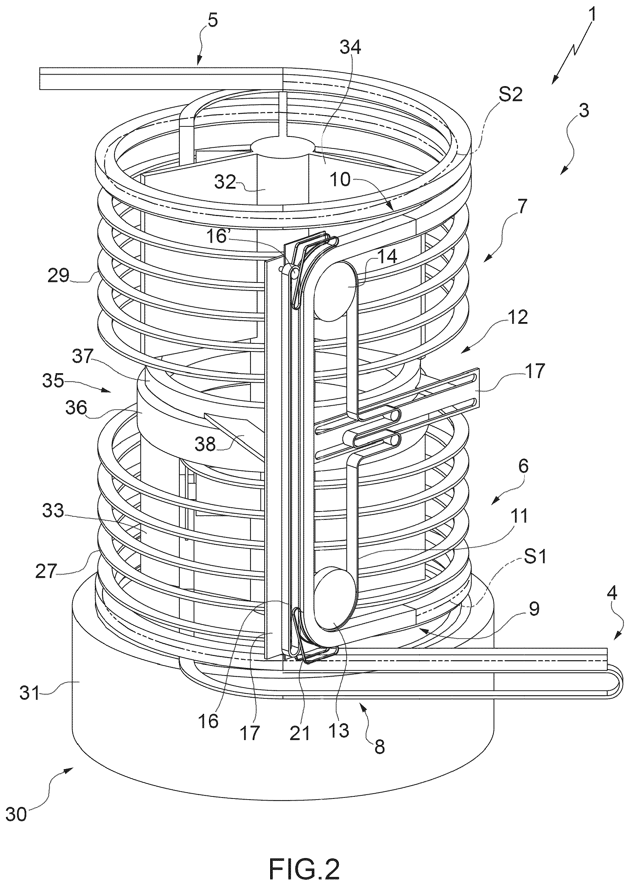

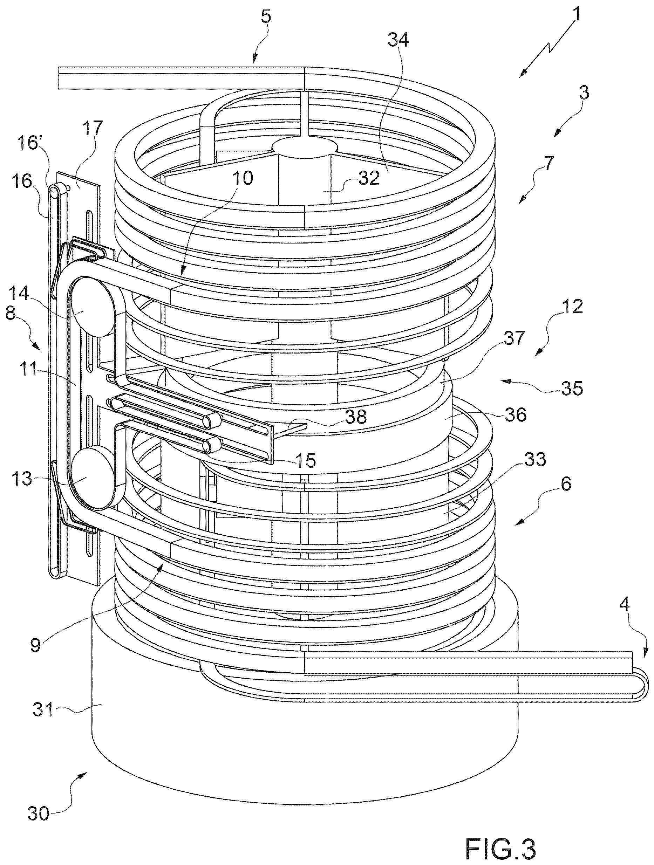

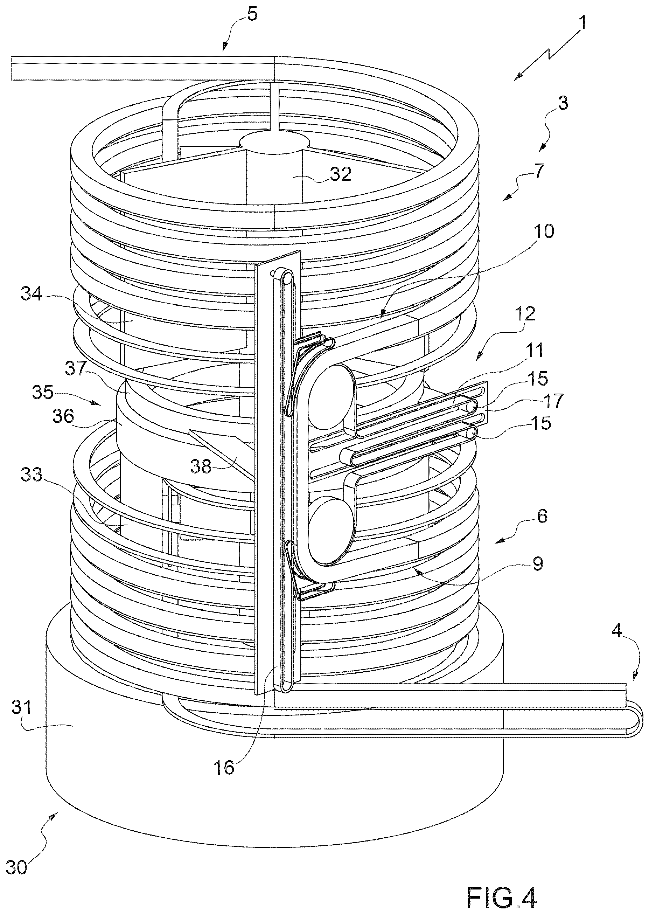

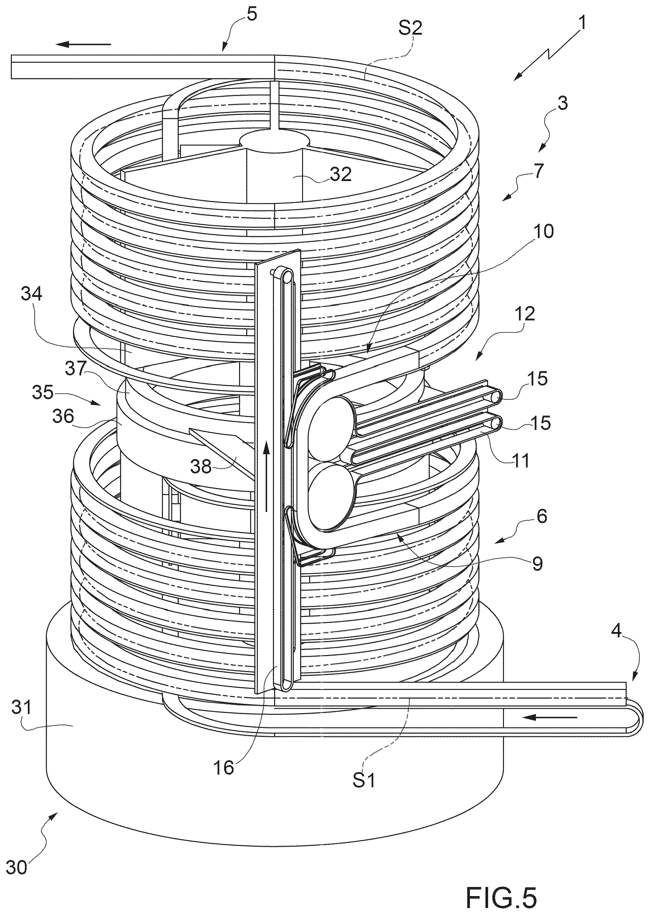

In particular, the moving assembly 12 (figures 1-5) is configured to move the transfer conveyor assembly 8 so as to move the joining device 9' and/or the joining device 10' along the conveyors 6 and 7, respectively.

Advantageously, though not necessarily, the transfer conveyor assembly 8 has at least an advancing device 11 configured to (at least partially) accompany the articles 2, moving (together with the articles) along an intermediate portion of the transfer segment IS. In particular, said intermediate portion of the transfer segment IS extends upwards, more in particular is substantially vertical.

According to some non-limiting embodiments, the advancing device 11 comprises (is) an oblong element closed on itself. In particular, the advancing device 11 comprises (is) a belt and/or a chain.

Thanks to the presence of the advancing device 11, the risks of clogging of articles 2 along the transfer segment IS and of damaging the articles 2 while, in use, they are conveyed along the transfer segment IS are reduced. Thanks to the advancing device 11, it is also possible to feed the articles 2 from the conveyor 6 arranged at the bottom to the conveyor 7 arranged at the top.

Advantageously, though not necessarily, the advancing device 11 is configured to (at least partially) move the articles 2, moving (together with the articles) along the transfer segment IS.

In particular, the transfer segment IS extends between the input 9 and the output 10 (more in particular, from the input 9 to the output 10).

The input 9 and the output 10 are movable along the conveyor 6 and the conveyor 7, respectively.

In particular, each conveyor 6 and 7 has at least a respective turn (e.g. a helix and/or a loop). Advantageously, though not necessarily, each conveyor 6 and 7 has a plurality of respective turns (loops). In other words, each conveyor 6 and 7 is wound on itself so as to have a plurality of turns (loops). More in particular, the winding direction of the conveyor 6 is contrary to the winding direction of the conveyor 7. For example, if (looking from above) the winding direction of the conveyor 7 is clockwise, the winding direction (always looking from above) of the conveyor 6 is counterclockwise.

Advantageously, though not necessarily, the conveyor 6 has a plurality of first turn (loops) and the second conveyor 7 has a plurality of second turns (loops) having the same radius and the same distance as the first turns.

According to specific non-limiting embodiments, the conveyor 6 has a plurality of turns with a constant radius and distance; the conveyor 7 has a plurality of turns with a constant radius and distance. More precisely, the conveyor 6 has at least a segment with a (cylindrical) helical shape with a constant radius and distance; the conveyor 7 has at least a segment with a (cylindrical) helical shape with a constant radius and distance.

According to alternative embodiments which are not shown herein, each turn comprises two curved end portions and two linear central portions. In these cases, for example, the turns extend around two drums having parallel axes (see, for example, figure 1 of EP738478 of the Applicant).

Advantageously, though not necessarily, the transfer conveyor assembly 8 comprises a pulley 13 (or, alternatively, a suitably shaped - for example, "U"-shaped - sliding plane) and a pulley 14, around which the advancing device 11 is partially wound.

In particular, the store 1 (more precisely, the transfer conveyor assembly 8) comprises at least an operating assembly (of a known type and not shown) for rotating at least one of the pulleys 13 and 14. More in particular, it should be pointed out that the transfer conveyor assembly 8 is structured in such a way that the output 10 is arranged approximately in the area (more precisely, at the height) of the pulley 14 and the input 9 is arranged in the area (more precisely, at the height) of the pulley 13 (or of the sliding plane alternative to the pulley 13).

According to some non-limiting embodiments, the aforementioned operating assembly comprises (is) a motor and/or a kinematic mechanism connected to other parts of the store 1.

Advantageously, though not necessarily, the store 1 (in particular, the transfer conveyor assembly 8; more in particular, the moving assembly 12) comprises an actuator assembly (of a known type and not shown) for moving the pulleys 13 and 14 closer to and away from one another, in particular in a direction of longitudinal extension (of the intermediate portion) of the transfer segment IS (more in particular, in a substantially vertical direction).

According to some non-limiting embodiments, the aforementioned actuator assembly comprises (is) a motor and/or kinematic mechanism connected to other parts of the store 1.

In particular, the aforementioned actuator assembly is configured to change the distance between the pulleys 13 and 14 as a function of (proportionally to) the difference between the speeds at which the conveyor 6 and the conveyor 7 convey the articles 2. More in particular, the actuator assembly is configured to change the distance between the pulleys 13 and 14 with a speed that is proportional to the difference between the speeds at which the conveyor 6 and the conveyor 7 convey the articles 2.

According to some non-limiting embodiments, the advancing device 11 comprises an active segment AT with a variable length, which extends along (the intermediate portion of) the transfer segment IS between the pulleys 13 and 14, and a passive segment PT arranged on the opposite side of the pulleys 13 and 14 relative to the active segment AT (in other words, so that the pulleys 13 and 14 are arranged between the active segment AT and the passive segment PT). The passive segment PT extends between the pulleys 13 and 14 and partially around at least a further pulley 15 of the transfer conveyor assembly 8, which also includes a further actuator assembly (also known and not shown) for moving the pulley 15 (away from and towards the transfer segment IS).

Advantageously, the relative movement between the pulleys 13 and 14 and the movement of the pulley 15 are connected to one another so that one compensates for the other (and the advancing device 11 always remains correctly stretched). In other words, when the active segment AT gets shorter by a given length, the passive segment PT gets longer by the given length and vice versa (compensating for one another).

In some non-limiting cases, the further actuator assembly comprises a kinematic mechanism, which transfers, according to a defined proportional ratio (for example 1 to 1), the relative movement (more precisely, the displacement) of the pulleys 13 and 14 to the pulley 15.

In particular, the transfer conveyor assembly 8 comprises at least a pulley 15 and at least two fixed pulleys (known and not shown - typically, arranged one above the other). More precisely, though not necessarily, the pulley 15 is arranged (at an intermediate height) between the two fixed pulleys and is (horizontally) movable towards and away from the fixed pulleys. The relative movement between the pulley 15 on the one hand and the fixed pulleys on the other hand compensates for the relative movement between the pulleys 13 and 14 (by lengthening the passive segment PT when the active segment AT is shortened and vice versa).

According to some specific and non-limiting embodiments (like the one shown herein), the transfer conveyor assembly 8 comprises at least two pulleys 15 and at least three fixed pulleys (known and not shown). In these cases, the relative movement between the pulleys 15 on the one hand and the fixed pulleys on the other hand compensates for the relative movement between the pulleys 13 and 14 (by lengthening the passive segment PT when the active segment AT shortens and vice versa).

Advantageously, though not necessarily, the transfer conveyor assembly 8 comprises at least a further advancing device 16, which faces the advancing device 11 and is configured to move along the intermediate portion of the transfer segment IS (in particular, in coordination with the advancing device 11; more precisely, at the same speed as the advancing device 11). In particular, the advancing device 11 and the advancing device 16 are designed to clamp the articles 2 between them and to at least partially accompany them (move them) along the transfer segment IS.

More precisely, the advancing device 16 comprises (is) a belt and/or a chain.

Advantageously, though not necessarily, the transfer conveyor assembly 8 comprises a motor (electric motor - of a known type and not shown) to operate (rotate) one of the pulleys 16' and a different motor (electric motor - of a known type and not shown) to operate (rotate) one of the pulleys 14 and 13 (in particular, the pulley 14). In particular, the store 1 (more precisely, the transfer conveyor assembly 8) comprises a control unit configured to operate the two electric motors in a coordinated manner so that the speeds of the advancing devices 11 and 16 are identical to one another (even when the pulleys 13 and 14 move away from or towards one another). For example, in use, when the pulleys 13 and 14 move away and the rotation speed of the pulleys 16' is kept constant (so as not to vary the speed of movement of the articles 1 along the segment IS), the rotation speed of the pulley 14 is decreased.

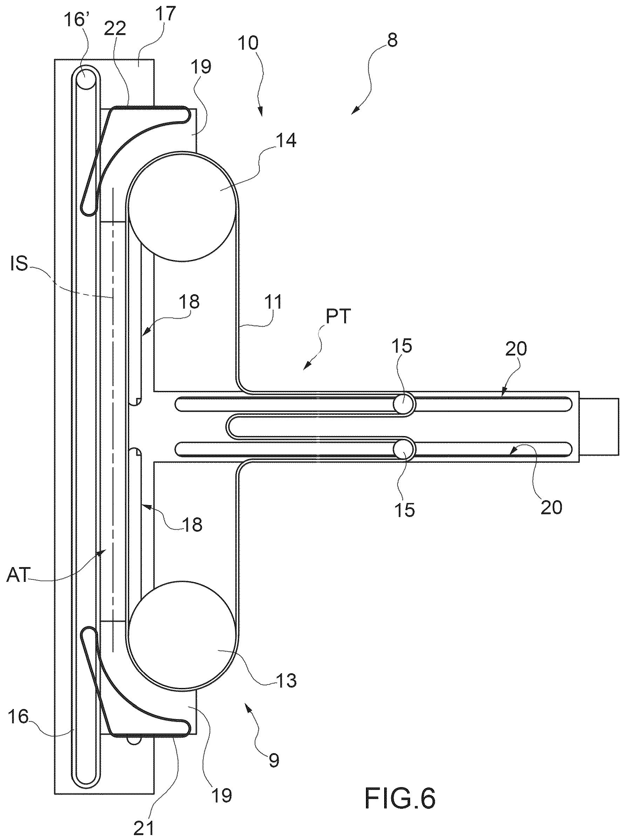

According to some alternative and non-limiting embodiments, the advancing device 16 is wound around a pair of pulleys 16' (one of them being shown in figures 1-6 and the other one being shown in figure 13). In particular, one of the pulleys 16' is connected, by means of a kinematic mechanism (known and not shown), to at least one of the pulleys 14 and 13, said kinematic mechanism (connected to a motor) being configured to transfer the rotary motion from the pulleys 13 and 14 to the pulley 16' so that the speeds of the advancing devices 11 and 16 are identical to one other.

Thanks to the advancing device 16, the risks of clogging of articles 2 along the transfer segment IS and of damaging the articles 2 while, in use, they are conveyed along the transfer segment IS are further reduced. Thanks to the advancing device 16, it is also possible improve the feeding of the articles 2 from the conveyor 6 arranged at the bottom to the conveyor 7 arranged at the top.

According to some non-limiting embodiments, the transfer conveyor assembly 8 comprises a plate 17, on which the aforementioned pulleys (in particular, the pulleys 13 and 14 and, if necessary, the pulley 15, the pulleys 16' and the fixed pulleys) are mounted. In particular, the plate 17 has slits 18, which act as a guide for the pulleys 13 and 14. In other words, in use, the pulleys 13 and 14 each slide along a respective slit 18.

Alternatively or in addition, the transfer conveyor assembly 8 comprises two flat supports 19, on which the pulleys 13 and 14, respectively, are mounted (in a rotary manner). More precisely, the aforementioned actuator assembly (not shown) is configured to move the flat supports 19.

In some cases, the flat supports 19 can slide along the slits 18 or are movable along linear guides. The movement of the flat supports 19 can be obtained, for example, by means of linear actuators and/or kinematic mechanisms connected to other parts of the store 1.

In addition or alternatively, the plate 17 has slits 20, which act as a guide for the pulley/s 15. In other words, in use, the pulley/s 15 slide/s along a respective slit 20.

According to alternative non-limiting embodiments, the pulleys 15 are mounted on respective sliders movable along linear guides. The movement of these sliders can be obtained, for example, by means of linear actuators and/or kinematic mechanisms connected to other parts of the store 1.

Advantageously, though not necessarily, the joining device 9' and the joining device 10' move in the direction of the longitudinal extension of the transfer segment IS in an integral manner to a respective pulley 13 and 14.

According to some non-limiting embodiments, the transfer conveyor assembly 8 further comprises a deflector belt 21 arranged in the area of the pulley 13 for directing (modifying their advancing direction) the articles 2, coming from the input 9, in the transfer segment IS. In addition or alternatively, the transfer conveyor assembly 8 further comprises a deflector belt 22 arranged in the area of the pulley 14 for directing (modifying their advancing direction) the articles 2, coming from the transfer segment IS, towards the output 10.

In particular, the deflector belts 21 and 22 are movable relative to one another, in a integral manner to the pulleys 13 and 14, respectively. According to some non-limiting embodiments, the deflector belts 21 and 22 are each mounted on a respective flat support 19.

Advantageously, though not necessarily, the conveyors 6 and 7 are arranged in such a way that one is (at least partially) above the other. In particular, the conveyor 7 is (at least partially) arranged above the conveyor 6 (and the output station 5 is arranged higher than the input station 4). By so doing, it is possible to have the output 10 in a relatively high position relative to the input 9.

In some non-limiting cases, the output station 5 is arranged higher (than the input 9) and than the input station 4. In particular, the output station 5 is arranged higher than the output 10, which, in turn, is arranged higher than the input 9, which is arranged higher than the input station 4.

More precisely (the conveyors 6 and 7 are arranged so that), the segments S1 and S2 are substantially coaxial to one another.

According to some non-limiting embodiments, the aforementioned intermediate portion of the transfer segment IS is (linear and) substantially parallel to an axis A around which the segment S1 and the segment S2 are wound.

In accordance with specific non-limiting embodiments, the segment IS also has two connection portions SC1 and SC2 (which are transverse - in particular, perpendicular - to the intermediate portion), which extend between the intermediate portion of the transfer segment IS and the segments S1 and S2, respectively. The transfer conveyor assembly 8 is configured to also convey the articles 2 along the connection portions SC1 and SC2.

More precisely, though not necessarily, the connecting portions SC1 and SC2 extend substantially horizontally.

According to some non-limiting embodiments, the transfer conveyor assembly 8 comprises conveyors with (substantially horizontal) movable transporting elements in the area of the connection portions SC1 and SC2.

Advantageously, though not necessarily, the moving assembly 12 is configured to rotate the transfer conveyor assembly 8 around the axis A.

In use, while the moving assembly 12 rotates the transfer conveyor assembly 8 around the axis A, the input 9 (more precisely, the joining device 9') moves (slides) along the conveyor 6 and the output 10 (more precisely, the joining device 10') moves (slides) along the conveyor 7. In order to have the input 9 follow the conveyor 6 and the output 10 follow the conveyor 7, the distance between the pulleys 13 and 14 is caused to change.

Figures 1 to 5 show the store 1 in successive operating phases while the store 1 is filled. These figures show the information disclosed above, namely that the rotation movement is also associated with a variation in the length of the segment IS (in other words, a variation in the distance between the pulleys 13 and 14).

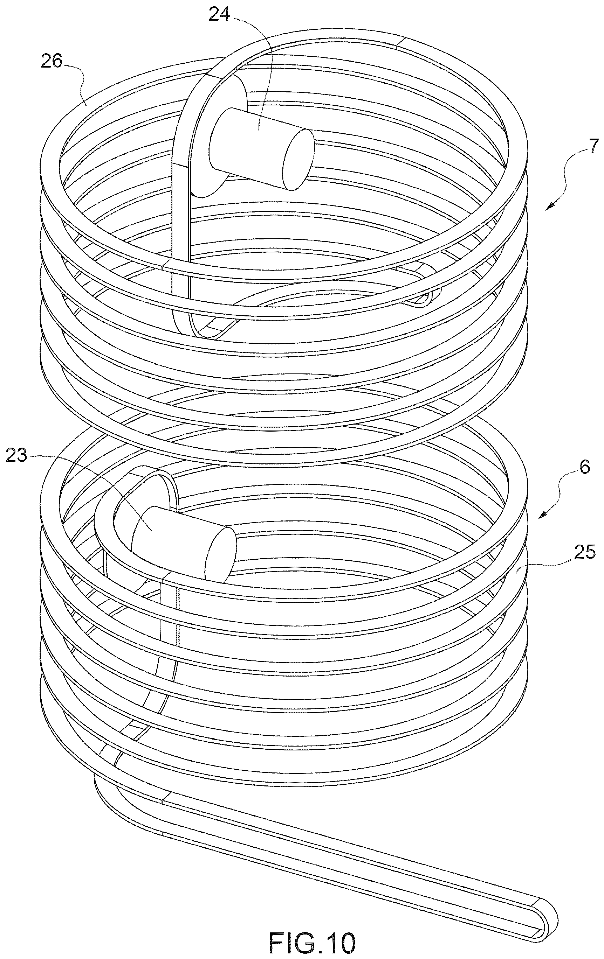

As better shown in figure 10, the conveyor 6 comprises at least a motorised pulley 23 and the conveyor 7 comprises at least a motorised pulley 24. The pulleys 23 and 24 are designed to allow a transporting element 25 and a transporting element 26, respectively, to move along the segment S1 and S2, respectively, (and along relative return segments). The segments S1 and the respective return segment define, together, a path closed on itself (typical of an endless conveyor). The segments S2 and the respective return segment define, together, a path closed on itself (typical of an endless conveyor).

The transporting element 25 is, according to some non-limiting embodiments, a belt and/or a chain. Advantageously, though not necessarily, the transporting element 25 is a chain. More precisely, the transporting element 25 is a chain as disclosed, for example, in US6364094 and/or WO2013141807.

The transporting element 26 is, according to some non-limiting embodiments, a belt and/or a chain. Advantageously, though not necessarily, the conveyor element 26 is a chain. More precisely, the transporting element 26 is a chain as disclosed, for example, in US6364094 and/or WO2013141807.

The transporting elements 25 and 26 allow the articles 2 to be handled delicately.

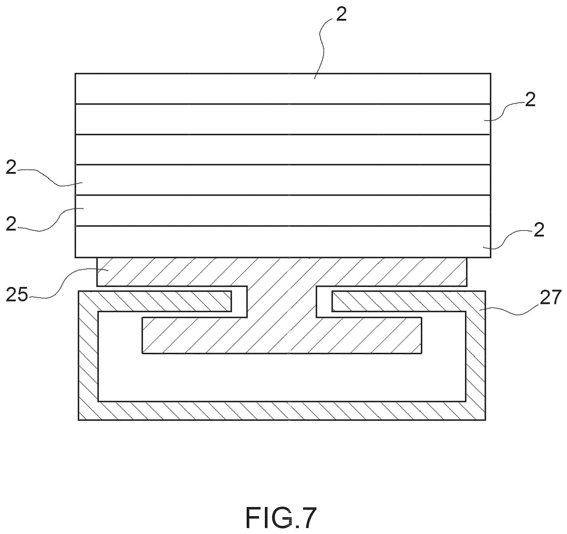

Advantageously, though not necessarily, the conveyor 6 comprises (figure 7) a guide (a track) 27.

In particular, the transporting element 25 is configured to slide on the guide 27.

According to some non-limiting embodiments, the guide 27 is provided with an indent 28, inside which a (lower) protuberance of the transporting element 25 extends. Thanks to this structure, the element 25 follows the guide 27 and moves along the segment S1. To this regard, it should be pointed out that the guide 27 extends along the path S1; more precisely, the guide 27 has the shape of the path S1 (and defines the path S1).

In addition or alternatively, the conveyor 7 comprises a guide (track) 29.

In particular, the transporting element 26 is configured to slide on the guide 29.

According to some non-limiting embodiments, the guide 29 has a structure and function similar to the guide 27. The guide 29 extends along the path S2; more precisely, the guide 29 has the shape of the path S2 (and defines the path S1).

Advantageously, though not necessarily, the first centring elements 9" are arranged on opposite sides of the guide 27 and substantially in contact with the guide 27.

In addition or alternatively, the centring elements 10" are arranged on opposite sides of the guide (29) and substantially in contact with the guide 29.

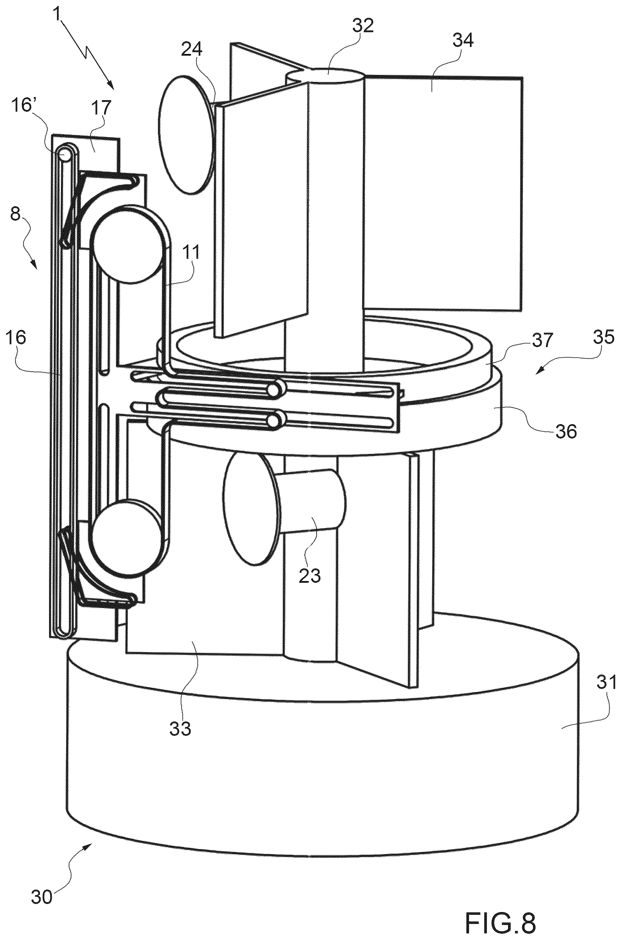

With particular reference to figure 8, according to some non-limiting embodiments, the store 1 also comprises a main support structure 30 carrying the conveyors 6 and 7 (more precisely, the guides 27 and 29) and the transfer conveyor assembly 8.

According to some non-limiting embodiments, the main support structure 30 comprises a base 31 and a support column 32 (perpendicularly) projecting from the base 31. In particular, the column 32 extends parallel to the axis A; more in particular, the column 32 extends along the axis A (in other words, the axis A - also - is the longitudinal axis of the column 32). More precisely, the column 31 has a vertical orientation.

According to some non-limiting embodiments, the main support structure 30 also comprises a support assembly 33 fixed on the column 32 and carrying the conveyor 6 (more precisely, the guide 27) and a support assembly 34 fixed on the column 32, spaced apart from the support assembly 33 and carrying the conveyor 7 (more precisely, the guide 29).

Furthermore, in some cases (like the one shown herein), the main support structure 30 also comprises a bearing 35, which, in particular, is interposed between the support assembly 33 and the support assembly 34 and is carried by the support assembly 33. The bearing 35 is part of the moving assembly 12. More precisely, the bearing 35 comprises a fixed portion 36 mounted on the support assembly 33 and a movable portion 37 configured to rotate around the axis A and carrying the transfer conveyor assembly 8. More in detail, the transfer conveyor assembly 8 is mounted so as to be integral to the bearing 35 (more precisely, to the movable portion 34) by means of two arms 38.

According to some non-limiting embodiments, the moving assembly 12 comprises at least a motor (of a known type and not shown) configured to move the transfer conveyor assembly 8 (more precisely, to rotate the transfer conveyor assembly 8 around the axis A). In these cases, in particular, the store 1 comprises sensors (encoders - of a known type and not shown) to detect the difference in speed between the conveyors 6 and 7 (more precisely, between the motorised pulleys 24 and 25) and a control unit to operate the moving assembly 12 as a function of this difference.

Advantageously, though not necessarily, the aforementioned actuator assembly (for moving the pulleys 13 and 14 towards and away from one another) comprises a kinematic mechanism (for example, a gear system with a worm screw) connected to the motor of the moving assembly 12 to transmit the motion (according to a particular proportion) to the pulleys 13 and 14 (in order to have them move towards and away from one another).

Advantageously, though not necessarily, the transfer conveyor assembly 8 is configured to change the speed at which the length of the transfer segment IS changes as a function of the rotation speed generated by the moving assembly 12 around the rotation axis (to this regard, see, for example, WO2019073447A1).

According to some embodiments, the moving assembly 12 comprises a mechanical connection configured to move the transfer conveyor assembly 8 (more precisely, to rotate the transfer conveyor assembly 8 around the axis A) as a function of the speed differences between the conveyors 6 and 7 (more precisely, between the motorised pulleys 24 and 25).

Typically, in use, the store 1 is placed between a first machine (for example, a cigarette maker machine) and the machine M (for example, a packer machine) so as to compensate for the different speeds at which the first machine feeds the articles 2 to the store 1 and the machine M uses the articles 2 coming from the store. More precisely, the store 1 comprises a control system (of which the control unit CU is part) connected to the first and to the second machine (for receiving information on the speeds) and configured to adjust the speed of the conveyor 6 so as to adapt it to the speed of the first machine (and to adjust the speed of the conveyor 7 so as to adapt it to the speed of the machine M).

With particular reference to figures 11 and 12 and according to some non-limiting embodiments, the joining device 9' comprises a central element 42, on which, in use, the articles 2 shift from the first conveyor 6 to the transfer conveyor assembly 8. The centring elements 9" are arranged on opposite sides of the central element 42 (and are substantially integral to the central element 42).

In addition or alternatively, the joining device 10' comprises a central element 43, on which, in use, the articles 2 shift from the transfer conveyor assembly 8 to the second conveyor 7. The centring elements 10" are arranged on opposite sides of the central element 43 (and are substantially integral to the second central element 42).

In this way, tests have shown that the relative position of the transfer conveyor assembly 8 (in particular, of the joining devices 9' and 10') with respect to the conveyors 6 and 7 is more stable and precise.

Advantageously, though not necessarily, the joining device 9' comprises at least an adjustment device for adjusting the position of the centring elements 9" relative to the conveyor 6 (in particular, relative to the guide 27). In particular, in this way it is possible to adjust the position of the centring elements 9" so that they are in contact with the guide 27.

In addition or alternatively, the joining device 10' comprises at least an adjustment device for adjusting the position of the centring elements 10" relative to the conveyor 7 (in particular, relative to the guide 29). In particular, in this way it is possible to adjust the position of the centring elements 10" so that they are in contact with the guide 29.

According to non-limiting embodiments, an adjustment device is provided for each centring element 9" and 10".

In some non-limiting cases, each adjustment device comprises (is) an eccentric (which can be operated, for example, by means of a screwdriver or the like).

Advantageously, though not necessarily, the central element 42 has at least a distal portion 44 relative to the transfer conveyor assembly 8 (namely, arranged at a distal end with respect to the transfer conveyor assembly 8), which is tapered towards the conveyor 6.

Optionally, in addition or alternatively, the central element 43 has at least a distal portion 45 relative to the transfer conveyor assembly 8 (namely, arranged at a distal end with respect to the transfer conveyor assembly 8), which is tapered towards the second conveyor 7.

In this way, it is easier for the articles 2 to be transferred from and to the transfer conveyor assembly 8, thus reducing at the same time the risk of clogging.

According to some non-limiting embodiments, the central elements 42 act as chutes.

Advantageously, though not necessarily, the transporting element 25 (in particular, a belt and/or a chain) is configured to slide along at least the segment S1 and has at least a depression 46 (in particular, at least two depressions 46), which longitudinally extends along the transporting element 25.

In addition or alternatively, the transporting element 26 is configured to slide along at least the segment S2 and has at least a depression 47 (in particular, at least two depressions 47), which longitudinally extends along the transporting element 26.

In particular, the first central element 42 has at least a tine 48 (more in particular, at least two tines), which projects on the opposite side relative to the transfer conveyor assembly 8 (in particular, from the distal portion 44) and, in particular, at least partially extends inside the depression 46.

In addition or alternatively, the central element 43 has at least two tines 49, which project on the opposite side relative to the transfer conveyor assembly 8 (in particular, from the distal portion 45) and, in particular, (each) at least partially extend inside a (respective) depression 46.

In this way, it is easier for the articles 2 to be transferred from and to the transfer conveyor assembly 8 and the risk of clogging is reduced.

Advantageously, though not necessarily, each tine 48 and 49 is tapered towards its free end (in particular, away from the transfer conveyor assembly 8).

Advantageously, though not necessarily, the joining device 9' comprises at least a lower roller 50 (in particular, a bearing), which is arranged in contact with the conveyor 6 (in particular, in contact with the transporting element 25; in particular, is arranged between the central element 42 and the conveyor 6) and is configured to help the first joining device 9' slide on the first conveyor 6. In particular, the lower roller 50 has a rotation axis transverse to the segment S1.

Tests have shown that, in this way, the sliding of the joining devices 9' and 10' is better and the risk of clogging is reduced.

In addition or alternatively, the joining device 10' comprises at least a lower roller 51 (in particular, a bearing), which is arranged in contact with the conveyor 7 (in particular, in contact with the transporting element 26; in particular, is arranged between the central element 43 and the conveyor 7) and is configured to help the second joining device 10' slide on the second conveyor 7. In particular, the lower roller 51 has a rotation axis transverse to the segment S2.

According to some non-limiting embodiments, the joining device 9' comprises at least two lower rollers 50 that are offset relative to one another (and/or staggered, in particular as regards the position along the segment S1) . In addition or alternatively, the joining device 10' comprises at least two lower rollers 51 that are offset relative to one another (and/or staggered, in particular as regards the position along the segment S2) .

Tests have shown that, in this way, the sliding of the joining devices 9' and 10' surprisingly is smoother (with smaller jolts) and the risk of clogging is reduced. This behaviour was particularly evident when the transporting elements 25 and 26 had an irregular surface (for example, they were chains).

It is supposed that this result is due to the fact that, with this structure, the lower rollers 50 (and/or 51) are not simultaneously located in recesses (discontinuities) of the transporting element 25 (and/or 26).

Advantageously, though not necessarily, the joining device 9' comprises at least an adjustment device for adjusting the position of the lower roller/s 50 relative to the conveyor 6 (in particular, relative to the transporting element 25). In addition or alternatively, the joining device 10' comprises at least an adjustment device for adjusting the position of the lower roller/s 51 relative to the conveyor 7 (in particular, relative to the transporting element 26).

In particular, in this way, it is possible to adjust the position of the lower roller/s 50 so that it/they is/are correctly in contact with the transporting element 25 and/or the position of the lower roller/s 51 so that it/they is/are correctly in contact with the transporting element 26.

According to non-limiting embodiments, an adjustment device is provided for each lower roller 50 and 51.

In some non-limiting cases, each adjustment device comprises (is) an eccentric (which can be operated, for example, by means of a screwdriver or the like).

Advantageously, though not necessarily, the conveyor assembly 3 comprises a hinge 52, which is arranged between the joining device 9' and the transfer conveyor assembly 8 and is configured to allow the joining device 9' to pivot relative to the transfer conveyor assembly 8 around a respective pivoting axis (in particular, transverse to the segment S1).

In addition or alternatively, the conveyor assembly 3 comprises a hinge 53, which is arranged between the joining device 10' and the transfer conveyor assembly 8 and is configured to allow the joining device 10' to pivot relative to the transfer conveyor assembly 8 around a respective pivoting axis (in particular, transverse to the segment S1).

In this case, too, a more fluid movement of the articles 2 and a reduction in the risk of clogging were surprisingly observed.

The store 1 according to the invention offers several advantages relative to the state of the art. Among others, it should be pointed out that, in this way, it is possible to have a relatively uncomplicated structure that permits relatively simple maintenance operations. Furthermore, the store 1 is particularly flexible, for it is able to also have an output station at the top (a particularly convenient position for the layouts of the current machines), and is delicate in handling the items 2. The connections of the transfer conveyor assembly 8 to the conveyors 6 and 7 are stable and reliable. The risks of clogging of articles 2 and/or that these clogs are large and/or that articles 2 are damaged are also reduced.

According to a further aspect of the invention, there is also provided a plant (of the tobacco processing industry) comprising the store 1 and the machine M described above. Advantageously, though not necessarily, the plant also comprises a first machine (for example, a machine for the production of cigarettes); the store 1 is, in these cases, arranged between the first machine and the machine M.

According to a further aspect of the invention, there is provided a method of conveying articles 2, in particular substantially cylindrical articles (more in particular, of the tobacco processing industry), from an input station 4 to a machine M, along a path P with a variable length through an output station 5;
the method comprises:
a first conveying step, during which at least a conveyor 6 conveys the articles 2 from the input station 4 along a segment S1 of the path P;
a second conveying step, during which a conveyor 7 conveys the articles 2 to the output station 5 along a segment S2 of the path P arranged downstream of the segment S1;
a transfer step, during which a transfer conveyor assembly 8 conveys the articles 2 from the conveyor 6 to the conveyor 7 along a transfer segment IS of the path P and has an output 10, arranged in the area of the second segment S2 for feeding (and which feeds) the articles 2 to the second conveyor (7), and an input 9, arranged in the area of the segment S1 for receiving (and which receives) the articles 2 from the conveyor 6;
the method further comprises a moving step, which is at least partially simultaneous with the transfer step (and, in particular, at least partially simultaneous with the first conveying step) and during which a moving assembly 12 shifts the transfer conveyor assembly 8 so as to move the input 9 and the output 10 along the conveyor 6 and the conveyor 7, respectively.

An unloading device 5' is arranged in the area of the output station 5 and comprises: at least a third conveyor 5", which transfers the articles 2 to the machine M; a compensation area CA, which is arranged downstream of the conveyor 7 and upstream of the conveyor 5" (between the conveyor 7 and the conveyor 5") and contains a variable quantity of articles 2 (so as to at least partially compensate for capacity differences between the conveyor 7 and the conveyor 5"); and a control unit CU, which adjusts the operating speed of the conveyor 5" as a function of the requests of the machine M and the operating speed of the conveyor 7 as a function of a degree of filling of the compensation area CA.

Advantageously, though not necessarily, the conveyor 7 conveys the articles 2 towards the unloading device 5' (in particular, towards the compensation area CA) in a direction D1; the conveyor 5" conveys the articles 2 coming from the compensation area CA in a direction D2 different from (in particular, at least partially contrary to) the direction D1.

According to some non-limiting embodiments, the method comprises a feeding step, during which a feeding conveyor 7' receives the articles 2 from the conveyor 7 and feeds the articles 2 to the compensation area CA (in particular, in the direction D1). The control unit CU adjusts the operating speed of the feeding conveyor 7' as a function of the degree of filling of the compensation area CA.

In particular, the articles 2 have an oblong shape. More in particular, the conveyor assembly 3 and the unloading device 5' convey the articles 2 in a mass (namely, in contact with one another and in several layers - see for example the enlargement of the upper part of figure 1 and figure 15) and crosswise (namely, in a transverse direction, in particular perpendicular to their longitudinal extension).

Advantageously, though not necessarily, the unloading device 5' feeds the articles 2 to the machine M in a mass with a controlled height (in particular, ranging from a maximum height to a minimum height).

According to some non-limiting embodiments, the unloading device 5' comprises a detection system DS, which detects a level of the articles within the compensation area CA and is connected to the control unit CU. The control unit CU adjusts the operating speed of the feeding conveyor 7' (and, in particular, of the conveyor 7) as a function of the data detected by the detection system DS (in particular, as a function of the level of the articles within the compensation area CA). In particular, the detection system DS comprises at least a deformable belt 54, which changes its position within the compensation area as a consequence of the level of the articles within the compensation area CA, and a sensor 55 detects the position of the deformable belt 54.

Advantageously, though not necessarily, the method is implemented by the store 1 as described above.

### LIST OF THE REFERENCE NUMBERS OF THE FIGURES

- 1: store
- 2: articles
- 3: conveyor assembly
- 4: input station
- 5: output station
- 6: conveyor
- 7: conveyor
- 8: transfer conveyor assembly
- 9: input
- 10: output
- 11: advancing device
- 12: moving assembly
- 13: pulley
- 14: pulley
- 15: pulley
- 16: advancing device
- 17: plate
- 18: slits
- 19: flat supports
- 20: slits
- 21: deflector belt
- 22: deflector belt
- 23: motorised pulley
- 24: motorised pulley
- 25: transporting element
- 26: transporting element
- 27: guide
- 28: indent
- 29: guide
- 30: support structure
- 31: base
- 32: column
- 33: support assembly
- 34: support assembly
- 35: bearing
- 36: fixed portion
- 37: movable portion
- 38: arms
- 42: central element
- 43: central element
- 44: distal portion
- 45: distal portion
- 46: depression
- 47: depression
- 48: tine
- 49: tine
- 50: lower roller
- 51: lower roller
- 52: hinge
- 53: hinge
- 54: deformable belt
- 55: sensor
- 56: transfer channel
- 57: output channel
- 58: levelling wall
- 5': unloading device
- 5": conveyor
- 7': feeding conveyor
- 9': joining device
- 10': joining device
- 16': pulleys
- 9": centring elements
- 10": centring elements
- A: axis
- P: path
- S1: segment
- S2: segment
- IS: transfer segment
- SC1: connection portion
- SC2: connection portion
- AT: active segment
- PT: passive segment
- M: machine
- CA: compensation area
- CU: control unit
- D1: first direction
- D2: second direction
- DS: detection system

## Claims

1. A variable-capacity store for articles (2), in particular substantially cylindrical articles of the tobacco processing industry; the store (1) comprises a conveyor assembly (3) for conveying the articles (2) from an input station (4) to an output station (5) along a path (P) with a variable length;
the conveyor assembly (3) comprises a first conveyor (6), which is configured to feed the articles (2) from the input station (4) along a first segment (S1) of the path (P); at least a second conveyor (7), which is configured to feed the articles (2) to the output station (5) along a second segment (S2) of the path (P); and at least a transfer conveyor assembly (8), which is configured to convey the articles (2) from the first conveyor (6) to the second conveyor (7) along a transfer segment (IS) of the path (P) and has an input (9), which is arranged in the area of the first segment (S1) so as to receive the articles (2) from the first conveyor (6), and an output (10), which is arranged in the area of the second segment (S2) so as to feed the articles (2) to the second conveyor (7); the first segment (S1) extends from the input station (4) to the input (9); the second segment (S2) extends from the output (10) to the output station (5);
the store (1) comprising a moving assembly (12) to move the transfer conveyor assembly (8) so as to move said input (9) and said output (10) along the first and the second conveyor (6, 7), respectively;
**characterised in that** said
store (1) comprises an unloading device (5'), which is arranged in the area of the output station (5) and comprises: at least a third conveyor (5"), which is configured to transfer said articles (2) to a machine (M) arranged downstream of the store (1); a compensation area (CA), which is arranged downstream of the second conveyor (7) and upstream of the third conveyor (5"); a feeding conveyor (7'), which is configured to receive the articles (2) from the second conveyor (7) and to feed the articles (2) to the compensation area (CA), in particular in a first direction (D1);
and a control unit (CU), which is configured to adjust an operating speed of the third conveyor (5") as a function of the requests of the machine (M) and/or the operating speed of the feeding conveyor (7') as a function of the degree of filling of the compensation area (CA).

2. The store according to claim 1, wherein the unloading device (5') comprises a transfer channel (56) to take the articles (2) from the compensation area (CA), in particular comprising a variable-volume compensation chamber, to the third conveyor (5"); the store (1) further comprises an output channel (57), which is joined to the transfer channel (56) and is delimited, at the bottom, by the third conveyor (5") and, at the top, by a levelling wall (58).

3. The store according to claim 1 or 2, wherein the feeding conveyor (7') is configured to convey the articles (2) towards the compensation area (CA) in a first direction (D1); the third conveyor (5") is configured to convey the articles (2) coming from the compensation area (CA) in a second direction (D2), which is different from, in particular contrary to, the first direction.

4. The store according to any one of the preceding claims, wherein the control unit (CU) is configured to adjust the operating speed of the third conveyor (5") as a function of the requests of the machine (M) and the operating speed of the second conveyor (7) as a function of a degree of filling of the compensation area (CA).

5. The store according to any one of the preceding claims, wherein said articles (2) are substantially cylindrical; said conveyor assembly (3) and said unloading device (5') are configured to convey said articles (2) crosswise in a mass.

6. The store according to claim 5, wherein the unloading device (5') is configured to feed the articles (2) to said machine (M) in mass with a controlled height ranging from a maximum height to a minimum height.

7. The store according to any one of the preceding claims, wherein the unloading device (5') comprises a detection system (DS), which is configured to detect a level of the articles (2) inside the compensation area (CA) and is connected to said control unit (CU); the control unit (CU) being configured to adjust the operating speed of the feeding conveyor (7') as a function of the data detected by the detection system (DS); in particular, the detection system (DS) comprises at least a deformable element (54), which is configured to change its position inside the compensation area (CA) as a consequence of the level of the articles inside the compensation area (CA), and a sensor (55), which is configured to detect the position of the deformable element (54).

8. The store according to any one of the preceding claims, wherein the unloading device (5') comprises a transfer channel (56) for taking the articles (2) from the compensation area (CA), in particular comprising a variable-volume compensation chamber, to the third conveyor (5"), which is arranged under the compensation area (CA).

9. The store according to claim 8, wherein the unloading device (5') has a levelling wall (58), which is arranged above the third conveyor (5") and is configured to limit a height of a mass of articles (2) arranged on the third conveyor (5"); and an output channel (57), which is connected to the transfer channel (56) and is limited, at the bottom, by the third conveyor (5") and, at the top, by the levelling wall (58).

10. The store according to any one of the preceding claims, wherein the first and the second conveyor (6, 7) are arranged in such a way that one is at least partially above the other one, in particular the second conveyor (7) is at least partially arranged above the first conveyor (6); in particular, the turning direction of the first conveyor (6) being contrary to the turning direction of the second conveyor (7).

11. The store according to any one of the preceding claims, wherein the first and the second conveyor (6, 7) have turns that are substantially coaxial to one another; in particular, the first conveyor (6) has a plurality of first turns; the second conveyor (7) has a plurality of second turns having the same radius and the same distance as the first turns.

12. The store according to any one of the preceding claims, wherein the conveyor assembly (3) comprises a first joining device (9'), which is configured to allow the articles (2) to go from the first conveyor (6) to the transfer conveyor assembly (8) and is movable on the first conveyor (6); and a second joining device (10'), which is configured to allow the articles (2) to go from the transfer conveyor assembly (8) to the second conveyor (7) and is movable on the second conveyor (7);
the path (P) having a variable length;
the first joining device (9') comprises at least two first centring elements (9"), which are arranged on opposite sides of the first conveyor (6) for reducing the lateral movement of the first joining device (9') relative to the first conveyor (6), each of them comprising at least a first roller, in particular at least a roller bearing;
and/or the second joining device (10') comprises at least two second centring elements (10''), which are arranged on opposite sides of the second conveyor (7) for reducing the lateral movement of the second joining device (10') relative to the second conveyor (7), each of them comprising at least a second roller, in particular at least a roller bearing.

13. A conveying method of conveying articles (2), in particular substantially cylindrical articles of the tobacco processing industry, from an input station (4) to a machine (M), along a path (P) with a variable length through an output station (5);
the method comprises:
a first conveying step, during which a first conveyor (6) conveys the articles (2) from the input station (4) along a first segment (S1) of the path (P);
a second conveying step, during which a second conveyor (7) conveys the articles (2) to the output station (5) along a second segment (S2) of the path (P) arranged downstream of the first segment (S1);
a transfer step, during which a transfer conveyor assembly (8) conveys the articles (2) from the first conveyor (6) to the second conveyor (7) along a transfer segment (IS) of the path (P) and has an output (10), which is arranged in the area of the second segment (S2) so as to feed the articles (2) to the second conveyor (7), and an input (9), which is arranged in the area of the first segment (S1) so as to receive the articles (2) from the first conveyor (6);
the method further comprises a moving step, which is at least partially simultaneous with the transfer step and, in particular, at least partially simultaneous with the first conveying step and during which a moving assembly (12) shifts the transfer conveyor assembly (8) so as to move said input (9) and said output (10) along the first and the second conveyor (6, 7), respectively;
the method being **characterised in that** an unloading device (5') is arranged in the area of the output station (5) and comprises: at least a third conveyor (5"), which transfers said articles (2) to the machine (M); a compensation area (CA), which is arranged downstream of the second conveyor (7) and upstream of the third conveyor (5") and contains a variable quantity of articles (2); and a control unit (CU), which adjusts an operating speed of the third conveyor (5") as a function of the requests of the machine (M) and/or an operating speed of the feeding conveyor (7') as a function of a degree of filling of the compensation area (CA).

14. The method according to claim 13, wherein the second conveyor (7') conveys the articles (2) towards the compensation area (CA) in a first direction (D1); the third conveyor (5") conveys the articles (2) coming from the compensation area (CA) along an output channel (57), in particular in a second direction (D2), which is at least partially different from, more in particular contrary to, the first direction (D1).

15. The method according to claim 13 or 14 and comprising a feeding step, during which a feeding conveyor (7') receives the articles (2) from the second conveyor (7) and feeds the articles (2) to the compensation area (CA), in particular in the first direction (D1); the control unit (CU) adjusts the operating speed of the feeding conveyor (7') as a function of the degree of filling of the compensation area (CA).

16. The method according to any one of the claims from 13 to 15, wherein said conveyor assembly (3) and said unloading device (5') convey said articles (2) crosswise in mass.

17. The method according to any one of the claims from 13 to 16, wherein the unloading device (5') feeds the articles (2) to said machine (M) in a mass with a controlled height.

18. The method according to any one of the claims from 13 to 17, wherein the unloading device (5') comprises a detection system (DS), which detects a level of the articles inside the compensation area (CA) and is connected to said control unit (CU); the control unit (CU) adjusting the operating speed of the feeding conveyor (7') as a function of the data detected by the detection system (DS); in particular, the detection system (DS) comprises at least a deformable element (54), which changes its position inside the compensation area (CA) as a consequence of the level of the articles inside the compensation area (CA), and a sensor (55) detects the position of the deformable element (54).

19. The method according to any one of the claims from 13 to 18 and implemented by a store (1) according to any one of the claims from 1 to 12.

20. A plant comprising a store (1) according to any one of the claims from 1 to 12 and a machine (M) which is, for example, a packer machine or a machine to manufacture end products using the articles (2).

## Patentansprüche

1. Lager mit variabler Kapazität für Artikel (2), insbesondere im Wesentlichen zylindrischer Artikel der Tabakverarbeitungsindustrie; wobei das Lager (1) eine Förderanordnung (3) zum Fördern der Artikel (2) entlang eines Pfades (P) mit variabler Länge von einer Eingabestation (4) zu einer Ausgabestation (5) umfasst;
die Förderanordnung (3) umfasst einen ersten Förderer (6), der konfiguriert ist, die Artikel (2) von der Eingabestation (4) entlang eines ersten Segments (S1) des Pfades (P) zuzuführen; mindestens einen zweiten Förderer (7), der konfiguriert ist, die Artikel (2) entlang eines zweiten Segments (S2) des Pfades (P) zu der Ausgabestation (5) zuzuführen; und mindestens eine Umladeförderanordnung (8), die konfiguriert ist, die Artikel (2) entlang eines Umladesegments (IS) des Pfades (P) von dem ersten Förderer (6) zu dem zweiten Förderer (7) zu fördern, und eine Eingabe (9), die in dem Bereich des ersten Segments (S1) angeordnet ist, um die Artikel (2) von dem ersten Förderer (6) zu empfangen, und eine Ausgabe (10), die in dem Bereich des zweiten Segments (S2) angeordnet ist, um die Artikel (2) zu dem zweiten Förderer (7) zuzuführen, aufweist; wobei sich das erste Segment (S1) von der Eingabestation (4) zu der Eingabe (9) erstreckt; und das zweite Segment (S2) sich von der Ausgabe (10) zu der Ausgabestation (5) erstreckt;
wobei das Lager (1) eine Bewegungsanordnung (12) umfasst, um die Umladeförderanordnung (8) zu bewegen, um die Eingabe (9) und die Ausgabe (10) entlang des ersten bzw. des zweiten Förderers (6, 7) zu bewegen;
**dadurch gekennzeichnet, dass**
das Lager (1) eine Entladevorrichtung (5') umfasst, die in dem Bereich der Ausgabestation (5) angeordnet ist und umfasst: mindestens einen dritten Förderer (5"), der konfiguriert ist, die Artikel (2) zu einer Maschine (M) umzuladen, die stromabwärts des Lagers (1) angeordnet ist; einen Kompensationsbereich (CA), der stromabwärts des zweiten Förderers (7) und stromaufwärts des dritten Förderers (5") angeordnet ist; einen Zuführförderer (7'),der konfiguriert ist, die Artikel (2) von dem zweiten Förderer (7) zu empfangen und die Artikel (2) zu dem Kompensationsbereich (CA) zuzuführen, insbesondere in eine erste Richtung (D1); und eine Steuereinheit (CU), die konfiguriert ist, eine Betriebsgeschwindigkeit des dritten Förderers (5") als eine Funktion der Anforderungen der Maschine (M) und/oder die Betriebsgeschwindigkeit des Zuführförderers (7') als eine Funktion des Füllgrads des Kompensationsbereichs (CA) anzupassen.

2. Lager nach Anspruch 1, wobei die Entladevorrichtung (5') einen Umladekanal (56) umfasst, um die Artikel (2) von dem Kompensationsbereich (CA), der insbesondere eine Kompensationskammer mit variablen Volumen umfasst, zu dem dritten Förderer (5") zu bringen; das Lager (1) ferner einen Ausgabekanal (57) umfasst, der mit dem Umladekanal (56) verbunden ist und an der Unterseite durch den dritten Förderer (5") und an der Oberseite durch eine Nivellierwand (58) begrenzt ist.

3. Lager nach Anspruch 1 oder 2, wobei der Zuführförderer (7') konfiguriert ist, die Artikel (2) in einer ersten Richtung (D1) zu dem Kompensationsbereich (CA) zu fördern; der dritte Förderer (5") konfiguriert ist, die Artikel (2), die von dem Kompensationsbereich (CA) kommen, in einer zweiten Richtung (D2) zu fördern, die sich von der ersten Richtung (D1) unterscheidet, insbesondere entgegengesetzt dazu ist.

4. Lager nach einem der vorhergehenden Ansprüche, wobei die Steuereinheit (CU) konfiguriert ist, die Betriebsgeschwindigkeit des dritten Förderers (5") als eine Funktion der Anforderungen der Maschine (M) und die Betriebsgeschwindigkeit des zweiten Förderers (7) als eine Funktion eines Füllgrads des Kompensationsbereichs (CA) anzupassen.

5. Lager nach einem der vorhergehenden Ansprüche, wobei die Artikel (2) im Wesentlichen zylindrisch sind; die Förderanordnung (3) und die Entladevorrichtung (5') konfiguriert sind, die Artikel (2) in einer großen Menge quer zu fördern.

6. Lager nach Anspruch 5, wobei die Entladevorrichtung (5') konfiguriert ist, die Artikel (2) in großer Menge mit einer kontrollierten Höhe, die von einer maximalen Höhe zu einer minimalen Höhe reicht, der Maschine (M) zuzuführen.

7. Lager nach einem der vorhergehenden Ansprüche, wobei die Entladevorrichtung (5') ein Detektionssystem (DS) umfasst, das konfiguriert ist, ein Niveau der Artikel (2) innerhalb des Kompensationsbereichs (CA) zu detektieren, und mit der Steuereinheit (CU) verbunden ist; die Steuereinheit (CU) konfiguriert ist, die Betriebsgeschwindigkeit des Zuführförderers (7') als eine Funktion der Daten, die durch das Detektionssystem (DS) detektiert worden sind, anzupassen; insbesondere das Detektionssystem (DS) mindestens ein verformbares Element (54), das konfiguriert ist, seine Position innerhalb des Kompensationsbereichs (CA) als eine Konsequenz des Niveaus der Artikel innerhalb des Kompensationsbereichs (CA) zu ändern, und einen Sensor (55), der konfiguriert ist, die Position des verformbaren Elements (54) zu detektieren, umfasst.

8. Lager nach einem der vorhergehenden Ansprüche, wobei die Entladevorrichtung (5') einen Umladekanal (56) umfasst, um die Artikel (2) von dem Kompensationsbereich (CA), der insbesondere eine Kompensationskammer mit variablen Volumen umfasst, zu dem dritten Förderer (5'') zu bringen, der unter dem Kompensationsbereich (CA) angeordnet ist.

9. Lager nach Anspruch 8, wobei die Entladevorrichtung (5') eine Nivellierwand (58), die über dem dritten Förderer (5") angeordnet ist und konfiguriert ist, eine Höhe einer großen Menge von Artikeln (2), die auf dem dritten Förderer (5") angeordnet sind, zu begrenzen; und einen Ausgabekanal (57), der mit dem Umladekanal (56) verbunden ist und an der Unterseite durch den dritten Förderer (5") und an der Oberseite durch die Nivellierwand (58) begrenzt ist, aufweist.

10. Lager nach einem der vorhergehenden Ansprüche, wobei der erste und der zweite Förderer (6, 7) in einer solchen Weiseangeordnet sind, dass einer zumindest teilweise über dem anderen liegt, insbesondere der zweite Förderer (7) zumindest teilweise über dem ersten Förderer (6) angeordnet ist; insbesondere die Windungsrichtung des ersten Förderers (6) zu der Windungsrichtung des zweiten Förderers (7) entgegengesetzt ist.

11. Lager nach einem der vorhergehenden Ansprüche, wobei der erste und der zweite Förderer (6, 7) Windungen aufweisen, die im Wesentlichen koaxial zueinander sind; insbesondere der erste Förderer (6) mehrere ersten Windungen aufweist; der zweite Förderer (7) mehrere zweite Windungen aufweist, die den gleichen Radius und die gleiche Distanz wie die ersten Windungen aufweisen.

12. Lager nach einem der vorhergehenden Ansprüche, wobei die Förderanordnung (3) eine erste Verbindungsvorrichtung (9') umfasst, die konfiguriert ist, zu erlauben, dass die Artikel (2) von dem ersten Förderer (6) zu der Umladeförderanordnung (8) laufen, und die auf dem ersten Förderer (6) bewegbar ist; und eine zweite Verbindungsvorrichtung (10'), die konfiguriert ist, zu erlauben, dass die Artikel (2) von der Umladeförderanordnung (8) zu dem zweiten Förderer (7) laufen, und die auf dem zweiten Förderer (7) bewegbar ist;
der Pfad (P) eine variable Länge aufweist;
die erste Verbindungsvorrichtung (9') mindestens zwei Zentrierelemente (9'') umfasst, die auf gegenüberliegenden Seiten des ersten Förderers (6) angeordnet sind, um die seitliche Bewegung der ersten Verbindungsvorrichtung (9') relativ zu dem ersten Förderer (6) zu reduzieren, wobei jedes von diesen mindestens eine erste Rolle, insbesondere mindestens ein Rollenlager umfasst; und/oder die zweite Verbindungsvorrichtung (10') mindestens zwei zweite Zentrierelemente (10") umfasst, die auf gegenüberliegenden Seiten des zweiten Förderers (7) angeordnet sind, um die seitliche Bewegung der zweiten Verbindungsvorrichtung (10') relativ zu dem zweiten Förderer (7) zu reduzieren, wobei jedes von diesen mindestens eine zweite Rolle, insbesondere mindestens ein Rollenlager, umfasst.

13. Förderverfahren zum Fördern von Artikeln (2), insbesondere im Wesentlichen zylindrischer Artikel der Tabakverarbeitungsindustrie, von einer Eingabestation (4) zu einer Maschine (M) entlang eines Pfades (P) mit einer variablen Länge durch eine Ausgabestation (5);
wobei das Verfahren umfasst:
einen ersten Förder-Schritt, während dessen ein erster Förderer (6) die Artikel (2) von der Eingabestation (4) entlang eines ersten Segments (S1) des Pfades (P) fördert;
einen zweiten Förder-Schritt, während dessen ein zweiter Förderer (7) die Artikel (2) entlang eines zweiten Segments (S2) des Pfades (P), das stromabwärts des ersten Segments (S1) angeordnet ist, zu der Ausgabestation (5) fördert;
einen Umladeschritt, während dessen eine Umladeförderanordnung (8) die Artikel (2) entlang eines Umladesegments (IS) des Pfades (P) von dem ersten Förderer (6) zu dem zweiten Förderer (7) fördert und eine Ausgabe (10), die in dem Bereich des zweiten Segments (S2) angeordnet ist, um die Artikel (2) in zu dem zweiten Förderer (7) zuzuführen, und eine Eingabe (9), die in dem Bereich des ersten Segments (S1) angeordnet ist, um die Artikel (2) von dem ersten Förderer (6) zu empfangen, aufweist;
wobei das Verfahren ferner einen Bewegungs-Schritt umfasst, der zumindest teilweise gleichzeitig mit dem Umladeschritt und insbesondere zumindest teilweise gleichzeitig mit dem ersten Förder-Schritt ist, und während dessen eine Bewegungsanordnung (12) die Umladeförderanordnung (8) verschiebt, um die Eingabe (9) und die Ausgabe (10) entlang des ersten bzw. zweiten Förderers (6, 7) zu bewegen;
wobei das Verfahren **dadurch gekennzeichnet ist, dass** eine Entladevorrichtung (5') in dem Bereich der Ausgabestation (5) angeordnet ist und umfasst: mindestens einen dritten Förderer (5"),der die Artikel (2) zu der Maschine (M) umlädt; einen Kompensationsbereich (CA), der stromabwärts des zweiten Förderers (7) und stromaufwärts des dritten Förderers (5") angeordnet ist und eine variable Menge von Artikeln (2) beinhaltet; und eine Steuereinheit (CU), die eine Betriebsgeschwindigkeit des dritten Förderers (5") als eine Funktion der Anforderungen der Maschine (M) und/oder eine Betriebsgeschwindigkeit des Zuführförderers (7') als eine Funktion eines Füllgrads des Kompensationsbereichs (CA) anpasst.

14. Verfahren nach Anspruch 13, wobei der zweite Förderer (7') die Artikel (2) in einer ersten Richtung (D1) zu dem Kompensationsbereich (CA) fördert; der dritte Förderer (5") die Artikel (2), die von dem Kompensationsbereich (CA) kommen, entlang eines Ausgabekanals (57), insbesondere in einer zweiten Richtung (D2), die sich zumindest teilweise von der ersten Richtung (D1) unterscheidet, insbesondere dazu entgegengesetzt ist, fördert.

15. Verfahren nach Anspruch 13 oder 14 und umfassend einen Zuführschritt, während dessen ein Zuführförderer (7') die Artikel (2) von dem zweiten Förderer (7) empfängt und die Artikel (2) zu dem Kompensationsbereich (CA) zuführt, insbesondere in der ersten Richtung (D1); wobei die Steuereinheit (CU) die Betriebsgeschwindigkeit des Zuführförderers (7') als eine Funktion des Füllgrads des Kompensationsbereichs (CA) anpasst.

16. Verfahren nach einem der Ansprüche von 13 bis 15, wobei die Förderanordnung (3) und die Entladevorrichtung (5') die Artikel (2) in großer Menge quer fördern.

17. Verfahren nach einem der Ansprüche von 13 bis 16, wobei die Entladevorrichtung (5') die Artikel (2) in großer Menge mit einer kontrollierten Höhe zu der Maschine (M) zuführt.

18. Verfahren nach einem der Ansprüche von 13 bis 17, wobei die Entladevorrichtung (5') ein Detektionssystem (DS) umfasst, das ein Niveau der Artikel (2) innerhalb des Kompensationsbereichs (CA) detektiert und mit der Steuereinheit (CU) verbunden ist; die Steuereinheit (CU) die Betriebsgeschwindigkeit der Zuführförderers (7') als eine Funktion der Daten, die durch das Detektionssystem (DS) detektiert worden sind, anpasst; insbesondere das Detektionssystem (DS) mindestens ein verformbares Element (54), das seine Position innerhalb des Kompensationsbereichs (CA) als eine Konsequenz des Niveaus der Artikel innerhalb des Kompensationsbereichs (CA) verändert, und einen Sensor (55), der die Position des verformbaren Elements (54) detektiert, umfasst.

19. Verfahren nach einem der Ansprüche von 13 bis 18 und implementiert durch ein Lager (1) nach einem der Ansprüche von 1 bis 12.

20. Anlage, umfassend ein Lager (1) nach einem der Ansprüche von 1 bis 12 und eine Maschine (M), die zum Beispiel eine Verpackungsmaschine oder eine Maschine zum Herstellen von Endprodukten unter Verwendung der Artikel (2) ist.

## Revendications

1. Magasin à capacité variable pour des articles (2), plus précisément des articles sensiblement cylindriques de l'industrie de la transformation du tabac ; le magasin (1) comprend un ensemble de convoyeurs (3) pour transporter les articles (2) depuis une station d'entrée (4) vers une station de sortie (5) le long d'une voie (P) de longueur variable ;
l'ensemble de convoyeurs (3) comprend un premier convoyeur (6), qui est configuré pour amener les articles (2) depuis la station d'entrée (4) le long d'un premier segment (S1) de la voie (P) ; au moins un deuxième convoyeur (7), qui est configuré pour amener les articles (2) dans la station de sortie (5) le long d'un deuxième segment (S2) de la voie (P) ; et au moins un ensemble convoyeur de transfert (8), qui est configuré pour transporter les articles (2) du premier convoyeur (6) au deuxième convoyeur (7) le long d'un segment de transfert (IS) de la voie (P) et présente une entrée (9), qui est agencée dans la zone du premier segment (S1) de manière à recevoir les articles (2) provenant du premier convoyeur (6), et une sortie (10), qui est agencée dans la zone du deuxième segment (S2) de manière à amener les articles (2) dans le deuxième convoyeur (7) ; le premier segment (S1) s'étend de la station d'entrée (4) à l'entrée (9) ; le deuxième segment (S2) s'étend de la sortie (10) à la station de sortie (5) ;
le magasin (1) comprenant un ensemble de déplacement (12) destiné à déplacer l'ensemble convoyeur de transfert (8) de manière à déplacer ladite entrée (9) et ladite sortie (10) respectivement le long du premier et du deuxième convoyeur (6, 7) ;
**caractérisé en ce que**
ledit magasin (1) comprend un dispositif de déchargement (5'), qui est agencé dans la zone de la station de sortie (5) et comprend : au moins un troisième convoyeur (5''), qui est configuré pour transférer lesdits articles (2) vers une machine (M) agencée en aval du magasin (1) ; une zone de compensation (CA), qui est agencée en aval du deuxième convoyeur (7) et en amont du troisième convoyeur (5'') ; un convoyeur d'amenée (7'), qui est configuré pour recevoir les articles (2) provenant du deuxième convoyeur (7) et pour amener les articles (2) dans la zone de compensation (CA), plus précisément dans une première direction (D1) ;
et une unité de commande (CU), qui est configurée pour ajuster la vitesse de fonctionnement du troisième convoyeur (5") en fonction des demandes de la machine (M) et/ou la vitesse de fonctionnement du convoyeur d'amenée (7') en fonction du degré de remplissage de la zone de compensation (CA).

2. Magasin selon la revendication 1, dans lequel le dispositif de déchargement (5') comprend un canal de transfert (56) pour diriger les articles (2) depuis la zone de compensation (CA), comprenant plus précisément une chambre de compensation à volume variable, vers le troisième convoyeur (5") ; le magasin (1) comprend en outre un canal de sortie (57), qui est raccordé au canal de transfert (56) et est délimité, en bas, par le troisième convoyeur (5") et, en haut, par une paroi de nivellement (58).

3. Magasin selon la revendication 1 ou 2, dans lequel le convoyeur d'amenée (7') est configuré pour transporter les articles (2) vers la zone de compensation (CA) dans une première direction (D1) ; le troisième convoyeur (5") est configuré pour transporter les articles (2) provenant de la zone de compensation (CA) dans une deuxième direction (D2), qui est différente de la première direction et plus précisément opposée à celle-ci.

4. Magasin selon l'une quelconque des revendications précédentes, dans lequel l'unité de commande (CU) est configurée pour ajuster la vitesse de fonctionnement du troisième convoyeur (5") en fonction des demandes de la machine (M) et la vitesse de fonctionnement du deuxième convoyeur (7) en fonction d'un degré de remplissage de la zone de compensation (CA).

5. Magasin selon l'une quelconque des revendications précédentes, dans lequel lesdits articles (2) sont sensiblement cylindriques ; ledit ensemble de convoyeurs (3) et ledit dispositif de déchargement (5') sont configurés pour transporter lesdits articles (2) transversalement en une masse.

6. Magasin selon la revendication 5, dans lequel le dispositif de déchargement (5') est configuré pour amener les articles (2) dans ladite machine (M) en masse avec une hauteur commandée allant d'une hauteur maximale à une hauteur minimale.

7. Magasin selon l'une quelconque des revendications précédentes, dans lequel le dispositif de déchargement (5') comprend un système de détection (DS) configuré pour détecter un niveau des articles (2) à l'intérieur de la zone de compensation (CA) et est connecté à ladite unité de commande (CU) ; l'unité de commande (CU) étant configurée pour ajuster la vitesse de fonctionnement du convoyeur d'amenée (7') en fonction des données détectées par le système de détection (DS) ; plus précisément, le système de détection (DS) comprend au moins un élément déformable (54), qui est configuré pour changer de position à l'intérieur de la zone de compensation (CA) en fonction du niveau des articles à l'intérieur de la zone de compensation (CA), et un capteur (55), qui est configuré pour détecter la position de l'élément déformable (54).

8. Magasin selon l'une quelconque des revendications précédentes, dans lequel le dispositif de déchargement (5') comprend un canal de transfert (56) pour diriger les articles (2) depuis la zone de compensation (CA), comprenant plus précisément une chambre de compensation à volume variable, vers le troisième convoyeur (5''), qui est agencé sous la zone de compensation (CA).

9. Magasin selon la revendication 8, dans lequel le dispositif de déchargement (5') présente une paroi de nivellement (58), qui est agencée au-dessus du troisième convoyeur (5") et est configurée pour limiter une hauteur d'une masse d'articles (2) agencée sur le troisième convoyeur (5") ; et d'un canal de sortie (57), qui est relié au canal de transfert (56) et est limité, en bas, par le troisième convoyeur (5") et, en haut, par la paroi de nivellement (58).

10. Magasin selon l'une quelconque des revendications précédentes, dans lequel le premier et le deuxième convoyeur (6, 7) sont agencés de manière à ce que l'un soit au moins partiellement au-dessus de l'autre, plus précisément que le deuxième convoyeur (7) soit au moins partiellement agencé au-dessus du premier convoyeur (6) ; plus précisément, la direction de rotation du premier convoyeur (6) est opposée à la direction de rotation du deuxième convoyeur (7).

11. Magasin selon l'une quelconque des revendications précédentes, dans lequel le premier et le deuxième convoyeur (6, 7) présentent des spires qui sont sensiblement coaxiales les unes par rapport aux autres ; plus précisément, le premier convoyeur (6) présente une pluralité de premières spires ; le deuxième convoyeur (7) présente une pluralité de deuxièmes spires ayant le même rayon et la même distance que les premières spires.

12. Magasin selon l'une quelconque des revendications précédentes, dans lequel l'ensemble de convoyeurs (3) comprend un premier dispositif de raccordement (9'), qui est configuré pour permettre aux articles (2) de passer du premier convoyeur (6) à l'ensemble convoyeur de transfert (8) et est mobile sur le premier convoyeur (6) ; et un deuxième dispositif de raccordement (10'), qui est configuré pour permettre aux articles (2) de passer de l'ensemble convoyeur de transfert (8) au deuxième convoyeur (7) et est mobile sur le deuxième convoyeur (7) ;
la voie (P) ayant une longueur variable ;
le premier dispositif de raccordement (9') comprend au moins deux premiers éléments de centrage (9''), qui sont agencés sur des côtés opposés du premier convoyeur (6) pour réduire le mouvement latéral du premier dispositif de raccordement (9') par rapport au premier convoyeur (6), chacun d'entre eux comprenant au moins un premier rouleau, plus précisément au moins un roulement à rouleaux ;
et/ou le deuxième dispositif de raccordement (10') comprend au moins deux deuxièmes éléments de centrage (10''), qui sont agencés sur des côtés opposés du deuxième convoyeur (7) pour réduire le mouvement latéral du deuxième dispositif de raccordement (10') par rapport au deuxième convoyeur (7), chacun d'entre eux comprenant au moins un deuxième rouleau, plus précisément au moins un roulement à rouleaux.

13. Méthode de transport consistant à transporter des articles (2), plus précisément des articles sensiblement cylindriques de l'industrie de la transformation du tabac, depuis une station d'entrée (4) vers une machine (M), le long d'une voie (P) de longueur variable jusqu'à une station de sortie (5) ;
la méthode comprend :
une première étape de transport, au cours de laquelle un premier convoyeur (6) transporte les articles (2) depuis la station d'entrée (4) le long d'un premier segment (S1) de la voie (P) ;
une deuxième étape de transport, au cours de laquelle un deuxième convoyeur (7) transporte les articles (2) vers la station de sortie (5) le long d'un deuxième segment (S2) de la voie (P) agencé en aval du premier segment (S1) ;
une étape de transfert, au cours de laquelle un ensemble convoyeur de transfert (8) transporte les articles (2) du premier convoyeur (6) au deuxième convoyeur (7) le long d'un segment de transfert (IS) de la voie (P) et présente une sortie (10), qui est agencée dans la zone du deuxième segment (S2) de manière à amener les articles (2) dans le deuxième convoyeur (7), et une entrée (9), qui est agencée dans la zone du premier segment (S1) de manière à recevoir les articles (2) provenant du premier convoyeur (6) ;
la méthode comprend en outre une étape de déplacement, qui est au moins partiellement simultanée à l'étape de transfert et, plus précisément, au moins partiellement simultanée à la première étape de transport et au cours de laquelle un ensemble de déplacement (12) déplace l'ensemble convoyeur de transfert (8) de manière à déplacer ladite entrée (9) et ladite sortie (10) respectivement le long du premier et du deuxième convoyeur (6, 7) ;
la méthode étant **caractérisée en ce qu'**un dispositif de déchargement (5') est agencé dans la zone de la station de sortie (5) et comprend : au moins un troisième convoyeur (5''), qui transfère lesdits articles (2) vers la machine (M) ; une zone de compensation (CA), qui est agencée en aval du deuxième convoyeur (7) et en amont du troisième convoyeur (5") et contient une quantité variable d'articles (2) ; et une unité de commande (CU), qui ajuste une vitesse de fonctionnement du troisième convoyeur (5") en fonction des demandes de la machine (M) et/ou une vitesse de fonctionnement du convoyeur d'amenée (7') en fonction d'un degré de remplissage de la zone de compensation (CA).

14. Méthode selon la revendication 13, dans laquelle le deuxième convoyeur (7') transporte les articles (2) vers la zone de compensation (CA) dans une première direction (D1) ; le troisième convoyeur (5") transporte les articles (2) provenant de la zone de compensation (CA) le long d'un canal de sortie (57), plus précisément dans une deuxième direction (D2), qui est au moins partiellement différente de la première direction (D1) et plus précisément opposée à celle-ci.

15. Méthode selon la revendication 13 ou 14 et comprenant une étape d'amenée, au cours de laquelle un convoyeur d'amenée (7') reçoit les articles (2) provenant du deuxième convoyeur (7) et amène les articles (2) dans la zone de compensation (CA), plus précisément dans la première direction (D1) ;
l'unité de commande (CU) ajuste la vitesse de fonctionnement du convoyeur d'amenée (7') en fonction du degré de remplissage de la zone de compensation (CA).

16. Méthode selon l'une quelconque des revendications 13 à 15, dans laquelle ledit ensemble de convoyeurs (3) et ledit dispositif de déchargement (5') transportent lesdits articles (2) transversalement en masse.

17. Méthode selon l'une quelconque des revendications 13 à 16, dans laquelle le dispositif de déchargement (5') amène les articles (2) dans ladite machine (M) en une masse avec une hauteur commandée.

18. Méthode selon l'une quelconque des revendications 13 à 17, dans laquelle le dispositif de déchargement (5') comprend un système de détection (DS), qui détecte un niveau des articles à l'intérieur de la zone de compensation (CA) et est connecté à ladite unité de commande (CU) ; l'unité de commande (CU) ajustant la vitesse de fonctionnement du convoyeur d'amenée (7') en fonction des données détectées par le système de détection (DS) ; plus précisément, le système de détection (DS) comprend au moins un élément déformable (54) qui change de position à l'intérieur de la zone de compensation (CA) en fonction du niveau des articles à l'intérieur de la zone de compensation (CA), et un capteur (55) détecte la position de l'élément déformable (54).

19. Méthode selon l'une quelconque des revendications 13 à 18 et mise en œuvre par un magasin (1) selon l'une quelconque des revendications 1 à 12.

20. Installation comprenant un magasin (1) selon l'une quelconque des revendications 1 à 12 et une machine (M) qui est, par exemple, une empaqueteuse ou une machine pour fabriquer des produits finis à l'aide des articles (2).
